# EUROPEAN PATENT APPLICATION

(11) **EP 4 808 230 A1**
(43) Date of publication of application: **16.09.2026**
(21) Application number: 24889109.5
(22) Date of filing: 06.11.2024
(51) Int. Cl.: H04W 64/00, G01S 13/46, G01S 13/58, H04W 56/00, H04W 72/0453, H04W 72/0457, H04W 4/38, H04B 7/06, H04L 27/10

(54) **APPARATUS AND METHOD FOR COMBINING HIGH-PRECISION AND ULTRA-LOW-POWER SENSING AND COMMUNICATION IN WIRELESS COMMUNICATION SYSTEM**

(30) Priority: 06.11.2023 KR 20230151788; 02.10.2024 KR 20240134034; 05.11.2024 KR 20240155092
(71) Applicant: Electronics and Telecommunications Research Institute, Daejeon 34129 (KR)
(72) Inventor: CHANG, Kapseok, Daejeon 34129 (KR); KIM, Hyungju, Daejeon 34129 (KR); KO, Young Jo, Daejeon 34129 (KR)
(74) Representative: Betten & Resch
(86) International application number: PCT/KR2024/017370
(87) International publication number: WO 2025/100922

(57) **Abstract**

This disclosure generally relates to wireless communication systems, and more specifically to apparatuses and methods for combining ultra-precise and ultra-low-power sensing with communication in wireless communication systems. A method of operation for a base station (BS) for combining communication and sensing in a wireless communication system includes: transmitting to a user equipment (UE) multiplexed signals comprising communication signals and sensing signals in the same frequency band or time band; estimating at least one of position, velocity, direction, or size information of a target through the sensing signal; transmitting and receiving data with the UE through the communication signal; and transmitting a control signal to the UE for processing the sensing signal and the communication signal simultaneously or sequentially.

## Description

### Technical Field

The present disclosure generally relates to wireless communication systems, and more particularly to an apparatus and method for combining ultra-precise and ultra-power-efficient sensing with communication in wireless communication systems.

### Background Art

In addition to providing ultra-high-speed data transmission and low latency, wireless communication systems require accurate sensing and communication capabilities in various environments. These wireless communication systems primarily include next-generation communication systems such as 5G and are utilized in various application fields including sensor networks, autonomous driving, and Internet of Things (IoT). Such wireless communication systems require sensing technologies like radar for high-precision position estimation, target identification, and velocity measurement. In particular, as the demand for ICAS (Integrated Communication and Sensing) or ISAC (Integrated Sensing and Communication) systems that combine communication and sensing increases, the technical challenge of simultaneously improving the accuracy of both communication and sensing has become prominent.

Conventional communication systems mainly focused on data transmission, while radar-based sensing systems used separate frequency bands for target detection or position estimation. However, there is a growing demand to integrate communication and sensing systems to operate simultaneously in a single frequency band or on a single carrier. Particularly in next-generation communication technologies such as 6G, efficiently utilizing higher frequency bands by combining communication and sensing has emerged as an important technical objective.

### Disclosure

### Technical Problem

Based on the above discussion, the present disclosure provides an apparatus and method for combining ultra-precise and ultra-power-efficient sensing with communication in wireless communication systems.

Furthermore, the present disclosure provides an apparatus and method for simultaneously performing high-precision sensing from the base station (BS) perspective while maintaining communication quality through frequency or temporal multiplexing of communication and sensing functions, with ultra-power-efficiency from the user equipment (UE) or target perspective in wireless communication systems.

Additionally, the present disclosure provides an apparatus and method for detecting or identifying high-precision targets in wireless communication systems.

Moreover, the present disclosure provides an apparatus and method for activating sensing and communication functions only when needed by applying frequency shift keying (FSK) based backscattering technology in wireless communication systems.

Furthermore, the present disclosure provides an apparatus and method for simultaneously performing communication and sensing in a single frequency band or on a single carrier in wireless communication systems.

### Technical Solution

According to various embodiments of the present disclosure, an operation method of a base station (BS) for combining communication and sensing in a wireless communication system may include: transmitting multiplexed communication and sensing signals to a user equipment (UE) in the same frequency band or time domain; estimating at least one of position, velocity, direction, or size information of a target through the sensing signal; transmitting and receiving data with the UE through the communication signal; and transmitting control signals to the UE for simultaneous or sequential processing of sensing and communication signals.

According to various embodiments of the present disclosure, an operation method of a user equipment (UE) for combining communication and sensing in a wireless communication system may include: separately processing communication and sensing signals received from a base station (BS); receiving and analyzing target or UE information provided from the BS through the sensing signal, wherein the target or UE information includes position, velocity, direction, or size information; performing data transmission and reception with the BS through the communication signal; and transmitting results to the BS after processing the communication and sensing signals.

According to various embodiments of the present disclosure, an operation method of a base station (BS) for utilizing frequency bands for communication and sensing in a wireless communication system may include: allocating separate frequency bands for communication and sensing; estimating position, velocity, direction, or size of a target or user equipment (UE) by analyzing signals transmitted within the frequency band for sensing; and performing data transmission and reception with the UE in the frequency band for communication.

According to various embodiments of the present disclosure, a base station (BS) for combining communication and sensing in a wireless communication system includes a transceiver and a controller operably connected to the transceiver. The controller: transmits multiplexed communication and sensing signals to a user equipment (UE) in the same frequency band or time domain; estimates at least one of position, velocity, direction, or size information of a target or UE through the sensing signal; transmits and receives data with the UE through the communication signal; and transmits control signals to the UE for simultaneous or sequential processing of sensing and communication signals.

According to various embodiments of the present disclosure, a base station (BS) for combining communication and sensing in a wireless communication system designs and transmits sensing signals to achieve ultra-precise sensing in the frequency band or frequency resources designated by the multiplexing, and can estimate at least one of position, velocity, direction, or size information of a target or user equipment (UE) through the returning time-domain signals of these sensing signals.

### Advantageous Effects

The apparatus and method according to various embodiments of the present disclosure enable high-precision sensing while maintaining communication quality by simultaneously performing communication and sensing in a single system.

Furthermore, the apparatus and method according to various embodiments of the present disclosure enable the distinction of multiple targets and identification of their different properties and characteristics by accurately estimating target position, velocity, direction, and identifying targets.

Additionally, the apparatus and method according to various embodiments of the present disclosure enable high-performance sensing while minimizing battery consumption of the user equipment by applying frequency shift keying (FSK) based backscattering technology.

Moreover, the apparatus and method according to various embodiments of the present disclosure maximize the accuracy of sensing information by resolving the problem of sensing accuracy degradation caused by transmission and reception timing errors.

Furthermore, the apparatus and method according to various embodiments of the present disclosure enable minimized battery consumption of the user equipment and highly accurate target sensing and identification by frequency or temporal multiplexing of sensing and communication signals for both communication and sensing on a single carrier.

The effects obtainable from the present disclosure are not limited to those mentioned above, and other unmentioned effects will be clearly understood by those skilled in the art from the descriptions below.

### Description of Drawings

FIG. 1 illustrates a diagram of an FMCW radar according to various embodiments of the present disclosure.
FIG. 2 illustrates an example of potential problems that may occur when identifying multiple targets according to various embodiments of the present disclosure.
FIG. 3 illustrates an operation method of the ISAC system according to an embodiment of the present disclosure.
FIG. 4 illustrates a schematic diagram explaining the ISAC system according to an embodiment of the present disclosure.
FIG. 5 illustrates an example of bandwidth distribution multiplexing method for communication and sensing according to an embodiment of the present disclosure.
FIG. 6 illustrates an example of carrier distribution multiplexing method for communication and sensing according to an embodiment of the present disclosure.
FIG. 7 illustrates a signal flow diagram from ICAS system access to TDM-based sensing between TRPs according to an embodiment of the present disclosure.
FIG. 8 illustrates a signal flow diagram from ICAS system access to Full/Partial FDM-based sensing between TRPs according to an embodiment of the present disclosure.
FIG. 9 illustrates an example of securing LoS across multiple TRPs according to an embodiment of the present disclosure.
FIG. 10 illustrates an example of time and frequency structure of synchronization signal block according to various embodiments of the present disclosure.
FIG. 11 illustrates an example of 4-step contention-based random access procedure according to various embodiments of the present disclosure.
FIG. 12 illustrates an example of 2-step contention-based random access procedure according to various embodiments of the present disclosure.
FIG. 13 illustrates an example of first transceiver block diagram according to an embodiment of the present disclosure.
FIG. 14 illustrates an example of one transceiver signal waveform for the first transceiver block diagram according to an embodiment of the present disclosure.
FIG. 15 illustrates another example of transceiver signal waveform for the first transceiver block diagram according to an embodiment of the present disclosure.
FIG. 16 illustrates an example of second transceiver block diagram according to an embodiment of the present disclosure.
FIG. 17 illustrates an example of one transceiver signal waveform for the second transceiver block diagram according to an embodiment of the present disclosure.
FIG. 18 illustrates another example of transceiver signal waveform for the second transceiver block diagram according to an embodiment of the present disclosure.
FIG. 19 illustrates an IFFT input mapping diagram of digital BB frequency domain sensing signal according to an embodiment of the present disclosure.
FIG. 20 illustrates an example of Up-chirp based sensing and identification algorithm according to an embodiment of the present disclosure.
FIG. 21 illustrates an example of first Down-up-chirp based sensing and identification algorithm according to an embodiment of the present disclosure.
FIG. 22 illustrates an example of second Down-up-chirp based sensing and identification algorithm according to an embodiment of the present disclosure.
FIG. 23 illustrates a configuration diagram of a base station in a wireless communication system according to various embodiments of the present disclosure.
FIG. 24 illustrates a configuration diagram of a user equipment in a wireless communication system according to various embodiments of the present disclosure.

### Best Mode

The terms used in this disclosure are used to describe particular embodiments and are not intended to limit the scope of other embodiments. Singular expressions may include plural expressions unless the context clearly dictates otherwise. Technical or scientific terms used herein may have the same meanings as commonly understood by those skilled in the art to which this disclosure pertains. Terms defined in general dictionaries may be interpreted as having the same or similar meanings in the context of relevant technology and, unless explicitly defined otherwise in this disclosure, should not be interpreted in an idealistic or overly formal sense. In some cases, even terms defined in this disclosure should not be interpreted to exclude embodiments of the present disclosure.

The various embodiments of the present disclosure described below explain hardware approaches as examples. However, since the various embodiments of the present disclosure include technology using both hardware and software, the various embodiments of the present disclosure do not exclude software-based approaches.

Furthermore, in the detailed description and claims of this disclosure, "at least one of A, B, and C" may mean "only A", "only B", "only C" or "any combination of A, B, and C". Also, "at least one of A, B, or C" or "at least one of A, B, and/or C" may mean "at least one of A, B, and C".

Hereinafter, this disclosure relates to an apparatus and method for combining ultra-precise and ultra-power-efficient sensing with communication in wireless communication systems. Specifically, this disclosure relates to an ICAS (integrated communication and sensing) procedure, transmission and reception method, and apparatus that performs sensing while communicating through connection to a wireless communication system. This sensing includes: wireless distance estimation between transmitter and receiver required for wireless-based absolute time synchronization (ATS), measurement of wireless propagation delay between transmitter and receiver, target Doppler estimation, target velocity estimation, target shape estimation, target size estimation, target direction estimation, target position estimation, or estimation of relative movement between targets.

Terms used in the following description - including those referring to signals, channels, control information, network entities, and device components - are provided as examples for convenience of explanation. Therefore, the present disclosure is not limited to the terms described below, and other terms having equivalent technical meanings may be used.

Furthermore, although this disclosure explains various embodiments using terms used in certain communication specifications (e.g., 3GPP (3rd Generation Partnership Project)), these are merely examples for explanation. The various embodiments of the present disclosure can be readily modified and applied to other communication systems.

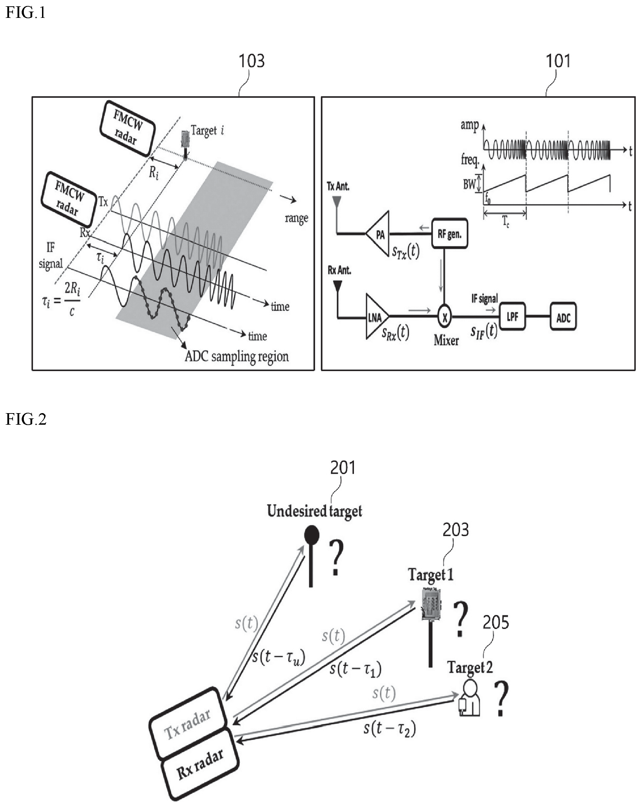

FIG. 1 illustrates a diagram of an FMCW (Frequency-Modulated Continuous Wave) radar according to various embodiments of the present disclosure.

Conventional radar (radio detection and ranging) methods include FMCW-based, PMCW (Pulse-Modulated Continuous Wave)-based, or OFDM (Orthogonal Frequency Division Multiplexing)-based approaches. However, these aforementioned methods have issues that this disclosure aims to address. Accordingly, this disclosure uses FIG. 1 to describe the problems of conventional radar methods, taking FMCW radar as an example.

Referring to box (101), in the transmitter of an up-chirp (compressed high-intensity radiated pulse) based FMCW radar, as shown in FIG. 1, an up-chirp analog signal is generated at the analog stage (e.g., IF (Intermediate Frequency) stage) by increasing the frequency from the reference frequency *f*₀ as time increases. This signal is then raised to the carrier frequency *f_{c}* and wirelessly propagated as an RF (Radio Frequency) signal through a power amplifier (PA) and transmitting antenna.

The difference between *f*₀ and the maximum increased frequency becomes the effective bandwidth (BW), and the time length of a single up-chirp signal can be defined as *T_{c}*. Meanwhile, at the receiver of the up-chirp based FMCW radar, as shown in FIG. 1, mixing is performed between the up-chirp analog signal generated at the analog stage of the transmitter and the reflected signal received at the analog stage of the receiver, which can then be down-converted to the IF stage.

Digital signals can be generated by performing LPF (Low Pass Filter) filtering and ADC (Analog-to-Digital Converter) conversion on the analog signals down-converted to the IF stage.

Referring to box (103), in the process of processing the generated digital signals (i.e., sensing), while the distance *Rᵢ* between the radar transmitter and Target i is estimated, other sensing information such as velocity estimation may also be possible. To aid understanding, the process of estimating distance can be explained using equations as follows, without considering the phase distortion components caused by hardware impairment.

First, the up-chirp signal at the LPF output of the transmitter's IF stage can be expressed as Equation 1. ${s}_{Tx} \left(t\right) = cos \left(2{πf}_{0}t+2π\frac{1}{2}\frac{W}{{T}_{c}}{t}^{2}\right)$

Next, the up-chirp signal at the receiver's IF stage can be expressed as Equation 2. $\begin{matrix}{s}_{IF} \left(t\right) = A ⋅ cos \left(2{πf}_{0}{τ}_{i}+2π\frac{2}{2}\frac{W}{{T}_{c}}{τ}_{i}t-2π\frac{1}{2}\frac{W}{{T}_{c}}{τ}_{i}^{2}\right) \\ \approx A ⋅ cos \left(2{πf}_{r , i}t+\frac{4 π}{λ}{R}_{i}\right) where {f}_{r , i} = \frac{W}{{T}_{c}} \frac{2}{c} {R}_{i} .\end{matrix}$

Here, A represents the received signal strength, *τᵢ* represents the RTT (Round-Trip Time) or RTD (Round-Trip Delay) between the transmitter and Target *i*, and *λ* may represent $\frac{c}{{f}_{c}}$. In Equation 2, c is the speed of light, which is 3×10^8 m/s.

Referring to box (103), digital signals are generated by performing ADC processing on Equation 2, and as shown by the shaded area in FIG. 1, *Rᵢ* can be estimated through FMCW radar estimation signal processing on the signals within the sampled up-chirp period after removing the transient signals received from reflections.

The FMCW radar shown in FIG. 1 is used for sensing objects at relatively short distances, so due to the short RTD of reflections, the transmitter and receiver must operate simultaneously at the same frequency. While simultaneous operation results in self-interference (SI) signal effects in the received signal, theoretically, since the SI signal has almost DC characteristics after passing through the Mixer of the FMCW radar receiver, i.e., *f*_{*r*,*i*} ≈ 0, it could be removed at the IF stage, though generally a DC remover might not be adopted. The FMCW radar examined in FIG. 1 is being commercialized and adopted globally for vehicular radar applications due to the inherent efficiency of the technology itself.

Meanwhile, it is important to note that the accuracy of wireless propagation delay sensing using conventional radar methods is far superior to that of the RTT method adopted in the conventional 3GPP Release-17 mobile communication standard system, with almost no technically uncontrollable error factors. In other words, when adopting the aforementioned RTT method, the accuracy of wireless propagation delay estimation can be affected by both the base station's transmission and reception timing errors, as well as the user equipment's reception and transmission timing errors. Here, reception timing errors can be minimized by designing for very short time resolution from a standard specification perspective. In contrast, transmission timing errors, occurring in forms such as jitter due to hardware impairment of the device, cannot be controlled even by standard specifications. Therefore, the RTT method inherently has limitations in improving accuracy.

Additionally, when adopting the RTT method, there is a problem of increased battery consumption in the user equipment since not only the base station but also the user equipment must perform processes for transmission and reception timing estimation. In contrast, by adopting the conventional FMCW-type radar method where sensing information is inherently in the frequency domain, the effects of the aforementioned transmission and reception timing errors can be avoided. Therefore, a very powerful advantage emerges in that the sensing accuracy can be improved by approaching only from a standard specification perspective.

FIG. 2 illustrates an example of potential problems that may occur when identifying multiple targets according to various embodiments of the present disclosure. Specifically, FIG. 2 demonstrates the limitations in separating and identifying multiple targets when detecting them simultaneously.

Referring to FIG. 2, the critical problem with the radar method of FIG. 1 is that while it can perform sensing on multiple targets, it cannot identify the sensed target objects. To help understanding, let's explain diagrammatically: as shown in FIG. 2, assume there are three targets around the radar - Undesired target (201), Target 1 (203), and Target 2 (205) - and the requirement is to distinctly sense the desired Target 1 (203) and Target 2 (205).

As shown in FIG. 2, when the transmitter (Tx radar) transmits a radar signal S(t) through its antenna, the Rx radar can receive *s*(*t* - *τᵤ*) reflected back from the Undesired target (201). Additionally, it can receive *s*(*t - τ*₁) reflected back from Target 1, which is desired to be sensed. It can also receive *s*(*t - τ*₂) reflected back from Target 2, which is also desired to be sensed. Here, the clear problem is that even though the conventional radar method can separately sense each target from the reflected signals *s*(*t - τᵤ*), *s*(*t - τ*₁), and *s*(*t-τ*₂), there is no way to determine which sensing information belongs to which target.

Furthermore, conventional radar methods are commercialized in frequency bands such as 24 GHz, 77 GHz, or 79 GHz. Until now, there has been no issue as these bands were used exclusively for sensing purposes. However, in 6G mobile communication systems, which demand higher transmission speeds with wider bandwidth along with higher sensing accuracy, it is expected that there will be a need to combine communication and sensing by sharing these frequency bands currently occupied by conventional commercial radar systems.

Additionally, if the frequency bands occupied by conventional radar are deemed unsuitable for communication due to very high hardware impairment, there is a possibility of combining communication and sensing in the upper-mid frequency band of 6 GHz ~ 12 GHz. In this case, while 6G communication will mainly focus on optimizing conventional technology, 6G sensing will face the challenge of achieving very high accuracy with relatively narrow bandwidth.

Therefore, there is a need to develop ICAS (Integrated Communication and Sensing) procedures, transmission and reception methods, and apparatus that maximize the advantages of the aforementioned radar method while simultaneously satisfying the requirements of both communication and sensing.

Hereinafter, a preferred embodiment of the present disclosure will be described in more detail with reference to the accompanying drawings. To facilitate overall understanding in explaining the present disclosure, the same reference numerals are used for the same components in the drawings, and redundant descriptions of the same components are omitted. While the device managing wireless devices is termed BS (Base Station) in this disclosure, it is not limited to this term and may be referred to as Cell, Primary Cell, Secondary Cell, or TRP (Transmission and Reception Point). Additionally, for convenience in explaining the communication and sensing system proposed in this disclosure, namely the ICAS (Integrated Communication and Sensing) system and/or ISAC (Integrated Sensing and Communication) system, wireless devices may be referred to as terminal, UE (User Equipment), Target, MS (Mobile Station), etc., and note that the term 'wireless' is omitted in all subsequent descriptions as it is self-evident.

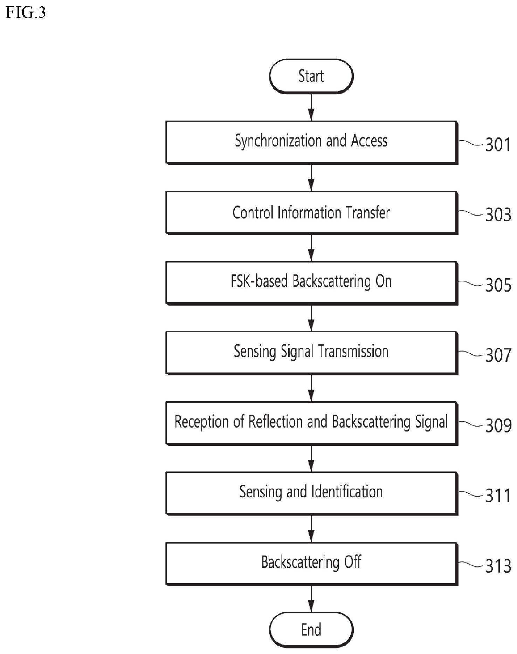

FIG. 3 illustrates an operation method of the ISAC system according to an embodiment of the present disclosure.

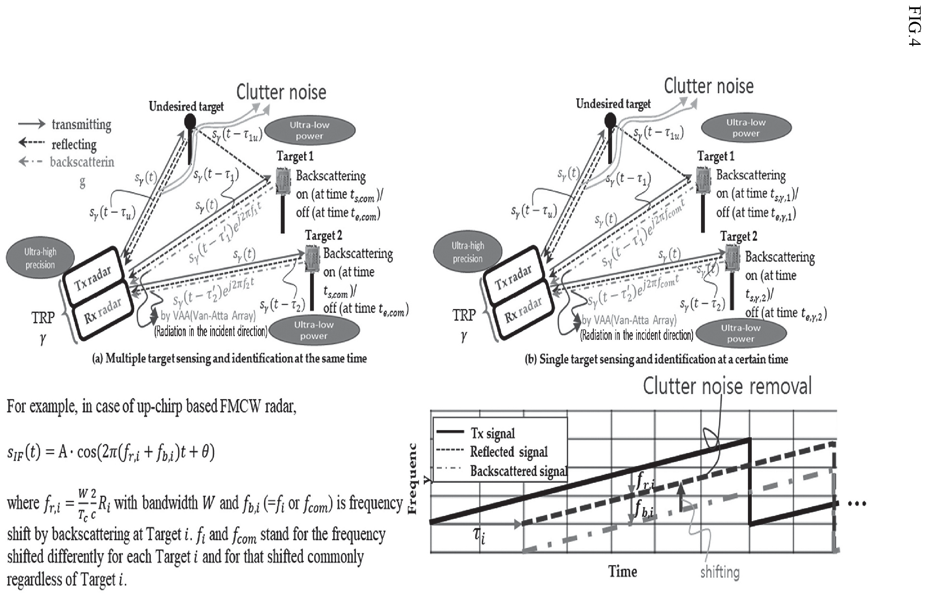

FIG. 4 illustrates a schematic diagram for explaining the ISAC system according to an embodiment of the present disclosure.

Specifically, FIG. 3 and FIG. 4 illustrate a conceptual framework that can minimize battery consumption of the user equipment and perform highly accurate target sensing and identification by applying frequency shift keying (FSK) based backscattering under the ICAS system.

First, referring to FIG. 4A, a conceptual framework is illustrated where multiple targets are simultaneously sensed and identified during the time interval (*t_{s,com}*, *t_{e,com}*) shown in FIG. 3.

Referring to FIG. 3, as shown in synchronization and access (301), Target 1 and Target 2, which desire simultaneous sensing and identification in the ICAS system of this disclosure, perform system access including synchronization and communication link setup to the ICAS system managed by TRP γ, enabling TRP *γ* to recognize these targets (301). Here, the Undesired Target is assumed to be a target that either does not or cannot connect to the ICAS system.

Furthermore, Target 1 and Target 2, which are subjects for sensing, can establish connection to the ISAC system through procedures such as synchronization with TRP *γ*, random access, and RRC (Radio Resource Control) configuration completion, even in environments with strong phase distortion (303). Once the connection is completed, TRP *γ* can recognize Target 1 and Target 2.

Next, as shown in control information transfer (303) and FSK-based Backscattering On (305) in FIG. 3, TRP γ can inform Target 1 and Target 2 of the common time information *t_{s,com}* and *t_{e,com}* for turning their FSK-based backscattering function on and off respectively (305). Upon receiving this, the targets can turn on their FSK-based backscattering function at time point *t*_{*s*,*com*} - Δ*t_{γ}*, either exactly at *t_{s,com}* or to secure function switching time Δt_γ, as shown in FIG. 4(a).

For convenience of explanation in this disclosure, it can be assumed that FSK-based backscattering is turned on exactly at time point *t*_{*s*,*com*} (305). By turning on the VAA (Van-Atta Array) and/or FSK (Frequency Shift Keying) based backscatterers equipped in desired Targets only when receiving the FSK-based backscattering on command, ultra-power-efficiency can be achieved from the perspective of terminal sensing performance. Here, VAA refers to an array antenna that makes the received signal return in the direction of incidence. Additionally, FSK-ing and backscattering the received signal means frequency shift keying-based backscattering by shifting the frequency component of the received signal by *f_{b,i}*, which will be explained below.

Referring to FIG. 3, as shown in sensing signal transmission (307), at *t_{s,com}*, the Tx radar corresponding to the transmitter of TRP *γ* can transmit a sensing signal *S_{γ}*(*t*) through the antenna (307).

Additionally, as shown in Reception of Reflection and Backscattered Signals (309) in FIG. 3, when *s_{γ}*(*t*) is transmitted, Rx radar can receive *s_{γ}*(*t - τᵤ*) reflected back from the Undesired target. Also, Rx radar can receive *s_{γ}*(*t - τ*₁) reflected back from Target 1, which is desired for simultaneous sensing and identification. Furthermore, Rx radar can receive *s_{γ}*(*t* - *τ*₂) reflected back from Target 2, which is also desired for simultaneous sensing and identification. Here, *τ*₁ represents the RTD from the moment *s_{γ}*(*t*) is transmitted from TRP *γ* until it returns after being reflected from Target 1, and *τ*₂ represents the RTD from the moment *s_{γ}*(*t*) is transmitted from TRP *γ* until it returns after being reflected from Target 2. It's important to note that signals directly reflected from the target surface contain clutter noise components that significantly reduce sensing accuracy, so removing these components is crucial.

Additionally, referring to Reception of Reflection and FSK-based Backscattered Signals (309) shown in FIG. 3, Target 1 and Target 2 can perform FSK-based backscattering. In other words, they can backscatter incoming signals by shifting the frequency by *f_{b,i}* as shown in FIG. 2. Here, *b* in *f_{b,i}* is the initial of backscattering, and *i* may be an index indicating the Target. To enable both target identification and aforementioned clutter noise avoidance, *f_{b,i}* can be set differently for each Target as *f_{b,i} = fᵢ* (*i* = 1,2). Accordingly, Rx radar can receive ${s}_{γ} \left(t-{τ}_{1}^{′}\right) {e}^{j 2 {πf}_{1} t}$ FSK-based backscattered from Target 1. Also, Rx radar can receive ${s}_{γ} \left(t-{τ}_{2}^{′}\right) {e}^{j 2 {πf}_{2} t}$ FSK-based backscattered from Target 2. Here, ${τ}_{1}^{′}$ represents the delay from when *s_{γ}*(*t*) is transmitted from TRP *γ* until it returns after being FSK-based backscattered from Target 1. ${τ}_{2}^{′}$ represents the delay from when *s_{γ}*(*t*) is transmitted from TRP *γ* until it returns after being FSK-based backscattered from Target 2. ${τ}_{1}^{′}$ can be expressed as *τ*₁ + Δ₁, where Δ₁ represents the time from when the signal enters Target 1's receiver until it is FSK-based backscattered. Δ₁ corresponds to the delay value of the hardware components in the FSK-based backscattering function block, and Δ₁ can be measured during the manufacturing of the FSK-based backscattering function block. However, Δ₁ is unlikely to affect sensing accuracy.

Furthermore, since Δ₁ may be a very small value, if it has negligible impact on sensing accuracy, it can be ignored, allowing us to assume ${τ}_{1}^{′} \approx {τ}_{1}$ and ${τ}_{2}^{′} \approx {τ}_{2}$. For convenience of explanation, from this point forward, we can assume ${τ}_{1}^{′} \approx {τ}_{1}$ and ${τ}_{2}^{′} \approx {τ}_{2}$.

As shown in Sensing and Identification in FIG. 3, TRP γ can perform sensing and identification for each Target using the reflected signals and FSK-based backscattered signals received from Target 1 and Target 2, following the sensing procedures and methods described later (311). At this point, the receiver of TRP *γ* 's sensing block can perform sensing on the received signals that are both reflected and FSK-based backscattered to estimate the propagation delay and/or movement velocity of the Targets. Additionally, as an example, ultra-precise sensing from the base station's perspective can be achieved according to the embodiment of this disclosure described later, which improves sensing information accuracy by efficiently using time resources while minimizing limited frequency resources.

Meanwhile, as shown in FSK-based Backscattering Off (313) in FIG. 3, to reduce battery consumption, Target 1 and Target 2 can turn off their FSK-based backscattering function at time point *t*_{*e*,*com*} + Δ*t_{γ}*, either exactly at *t_{e,com}* or to secure function switching time Δ*t_{γ}*, as shown in FIG. 4(a) (313).

Next, referring to FIG. 4(b), we explain the conceptual framework where Target 1 is sensed and identified during the time interval (*t*_{*s,γ,*1}, *t*_{*e,γ*,1}), and Target 2 is sensed and identified during the time interval (*t*_{*s,γ,*2}, *t*_{*e,γ,*2}).

First, as shown in synchronization and access in FIG. 3, Target 1 and Target 2, which desire simultaneous sensing and identification, perform system access including synchronization and communication link setup to the ICAS system managed by TRP γ, enabling TRP γ to recognize these targets (301). Here, the Undesired Target can be assumed to be a target that either does not or cannot connect to the ICAS system.

Target 1 and Target 2, which are subjects for sensing, can establish connection to the ISAC system through procedures such as synchronization with TRP γ, random access, and RRC configuration completion, even in environments with strong phase distortion (303). Once the connection is completed, TRP γ can recognize Target 1 and Target 2.

Next, as shown in control information transfer (303) and FSK-based Backscattering On (305) in FIG. 3, TRP γ can inform Target 1 of the time information *t*_{*s,γ,*1} and *t*_{*e,γ,*1} for turning their FSK-based backscattering function on and off respectively. Additionally, it can inform Target 2 of the time information *t*_{*s,γ,*2} and *t*_{*e,γ,*2} for turning their FSK-based backscattering function on and off (305). Upon receiving this, Target 1 can turn on their FSK-based backscattering function at time point *t*_{*s,γ,*1} - Δ*t*₁, either exactly at *t*_{*s,γ,*1} or to secure function switching time Δ*t*₁, as shown in FIG. 4(b).

For convenience of explanation in this disclosure, it can be assumed that FSK-based backscattering is turned on exactly at time point *t*_{*s,γ,*1}. Additionally, Target 2 can also turn on their FSK-based backscattering function at time point *t*_{*s*,2} - Δ*t*₂, either exactly at *t*_{*s,γ,*2} or to secure function switching time Δ*t*₂, as shown in FIG. 4(b). For convenience of explanation in this disclosure, it can be assumed that FSK-based backscattering is turned on exactly at time point *t*_{*s,γ,*2}. In this way, by turning on the VAA and/or FSK-based backscatterers equipped in desired Targets only when receiving the FSK-based backscattering on command, ultra-power-efficiency can be achieved from the perspective of terminal sensing performance. Here, VAA refers to an array antenna that makes the received signal return in the direction of incidence. Additionally, FSK-ing and backscattering the received signal means backscattering by shifting the frequency component of the received signal by *f_{b,i},* which will be explained later.

Next, as shown in sensing signal transmission (307) in FIG. 3, at *t*_{*s,γ,*1}, the Tx radar corresponding to the transmitter of TRP *γ* can transmit a radar signal *s_{γ}*(*t*) through the antenna. Additionally, at *t*_{*s,γ,*2}, the Tx radar corresponding to the transmitter of TRP *γ* can transmit a radar signal *s_{γ}*(*t*) through the antenna (307).

Next, as shown in Reception of Reflection and FSK-based Backscattered Signals (309) in FIG. 3, when the aforementioned *s_{γ}*(*t*) is transmitted, Rx radar can receive *s_{γ}*(*t - τᵤ*) reflected back from the Undesired target. Additionally, Rx radar can receive *s_{γ}*(*t - τ*₁) reflected back from Target 1, which is desired for simultaneous sensing and identification. Furthermore, Rx radar can receive *s_{γ}*(*t - τ*₂) reflected back from Target 2, which is also desired for simultaneous sensing and identification (309). It is important to note that signals directly reflected from the target surface contain clutter noise components that significantly reduce sensing accuracy, so removing these components is crucial.

Additionally, as shown in Reception of Reflection and FSK-based Backscattered Signals (309) in FIG. 3, Target 1 and Target 2 can perform FSK-based backscattering (309). In other words, they can backscatter incoming signals by shifting the frequency by *f_{b,i}* as shown in FIG. 4. Here, since *f_{b,i}* is used only for the purpose of removing the aforementioned clutter noise, it can be set as a common value *f_{b,i}* = *f_{com}* regardless of the Target. Furthermore, fixing the FSK frequency shift value to *f_{com}* has the effect of minimizing both the hardware implementation burden associated with variable adjustment of the shift value and the calibration errors that may occur during such variations.

Identification of whether it's Target 1 or Target 2 can be distinguished by the allocated time, as TRP γ has already assigned different backscattering times to Target 1 and Target 2. Accordingly, Rx radar can receive ${s}_{γ} \left(t-{τ}_{1}^{′}\right) {e}^{j 2 {πf}_{com} t}$ FSK-based backscattered from Target 1. Rx radar can receive ${s}_{γ} \left(t-{τ}_{2}^{′}\right) {e}^{j 2 {πf}_{com} t}$ reflected back from Target 2. Here, the explanation regarding ${τ}_{1}^{′}$ and ${τ}_{2}^{′}$ can be omitted as it was mentioned above.

Next, as shown in Sensing and Identification (311) in FIG. 3, TRP *γ* can perform sensing and identification for each Target by using the reflected signals and FSK-based backscattered signals received from Target 1 and Target 2, following the sensing procedures and methods described later (311). The receiver of TRP *γ*'s sensing block can perform sensing on the received signals that are both reflected and FSK-based backscattered to estimate the propagation delay and/or movement velocity of the Targets. Additionally, for example, ultra-precise sensing from the base station's perspective can be achieved by improving sensing information accuracy through efficient use of time resources while minimizing limited frequency resources, as will be described later.

Meanwhile, as shown in FSK-based Backscattering Off (313) in FIG. 3, to reduce battery consumption, Target 1 can turn off their FSK-based backscattering function at time point *t*_{*e,γ,*1} + Δ*t*₁, either exactly at *t*_{*e,γ,*1} or to secure function switching time Δ*t*₁, as shown in FIG. 4(b) (313). Additionally, Target 2 can turn off their FSK-based backscattering function at time point *t*_{*e,γ,*2} + Δ*t*₂, either exactly at *t*_{*e,γ,*2} or to secure function switching time Δ*t*₂.

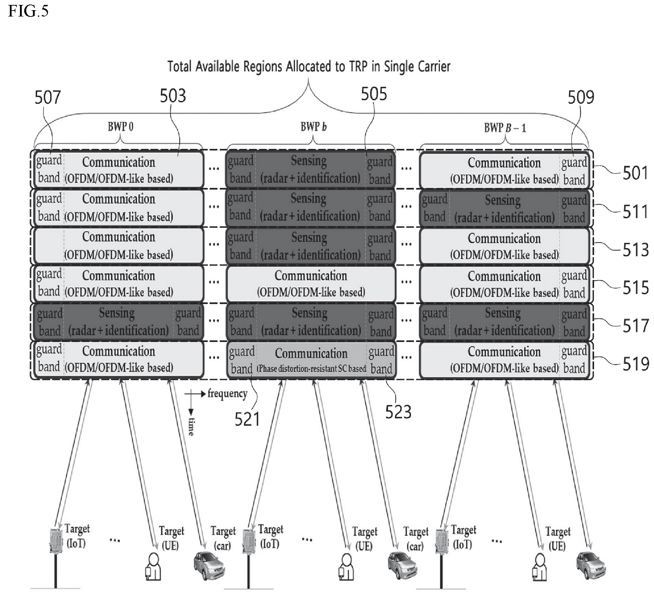

FIG. 5 illustrates an example of bandwidth distribution multiplexing method for communication and sensing according to an embodiment of the present disclosure.

For convenience of explanation, let's first define the terms carrier and bandwidth part (BWP). In FIG. 5, from an implementation perspective, carrier can be understood as a concept corresponding to the IFFT (Inverse Fast Fourier Transform) size that determines the system bandwidth of the TRP.

For example, in 5G NR (New Radio), the maximum IFFT size that can be processed in real-time in OFDM transmission mode is 4096, the maximum SCS (Subcarrier Spacing) for data signals is 120KHz, and guard bands for spectral masking can be considered. The maximum system bandwidth can be specified as 400 MHz. The frequency resources in subcarrier units corresponding to this system bandwidth can correspond to one carrier.

Additionally, BWP can correspond to a group of available subcarriers within a carrier. A single BWP could be the smallest, medium, or largest scheduling frequency resource allocated to a Target. A single BWP could also be a frequency resource used when scheduling multiple Targets by grouping them according to specified specifications.

FIG. 5 can illustrate a case where *B* BWPs are configured in one carrier. Additionally, the vertical downward direction in FIG. 5 represents the flow of time, and one time block could represent either a slot concept or a frame concept. The horizontal rightward direction represents the flow of frequency, and one frequency block can represent a BWP concept (or PRB (Physical Resource Block) concept, etc.).

The first time block (501) in FIG. 5 illustrates an embodiment that frequency-multiplexes BWPs (503) constituting OFDM or OFDM-like communication transmission mode and BWPs (505) constituting Sensing transmission mode that performs radar and identification. Here, the OFDM/OFDM-like communication transmission mode may include not only communication but also sensing, such as position estimation using PRS (Positioning Reference Signal) of 5G NR and other sensing information estimation using various RSs (Reference Signals).

Additionally, placing guard bands on the left side (507) of BWP 0 and the right side (509) of BWP *B*-1 in the first time block (501) for communication transmission mode can correspond to guard bands for the carrier.

Additionally, there are reasons for placing guard bands on both sides (507, 509) of BWP b constituting the sensing transmission mode. One reason is that radar-based sensing may require IFD (Inband Full Duplex) conditions where transmission and reception occur simultaneously at the same frequency. Under IFD conditions, self-interference (SI) signals, where very large transmission signals leak into one's own receiver, need to be effectively removed or reduced to enable sensing of the relatively very small desired received signals.

Furthermore, if all resources were used for sensing, sensing would be possible with some degree of SI removal or even with SI present. However, as shown in FIG. 5, when adjacent BWPs (or PRBs) are used for communication transmission mode and are positioned more for reception than transmission, guard bands must be placed because the aforementioned SI could interfere with the BWPs, making communication impossible.

Another reason is that the sensing transmission mode may not be OFDM-based, and in such cases, guard bands are specified to prevent interference with OFDM-based communication transmission mode, as orthogonality between subcarriers of OFDM cannot be maintained at the overall carrier level.

The second time block (511) is an embodiment showing a case where more frequency resources of the carrier are used for sensing compared to the first time block (501).

The third time block (513) is an embodiment showing a case where more frequency resources are used for communication, similar to the first time block (501).

It should be noted that BWP *b* is being used for sensing from the first time block (501) to the third time block (513). This is done because generally, when using a single time block, the frequency resources of a single BWP alone are insufficient to achieve high-level sensing accuracy.

Therefore, to overcome this limitation in radar methods that use frequency domain information for sensing, there is a possibility to improve sensing accuracy by using more time resources. Note that this is why the embodiment shows the continuous use of multiple time blocks even though only one BWP is allocated.

The fourth time block (515) is an embodiment showing a case where all BWPs are used for communication transmission mode without sensing. Conversely, the fifth time block (517) is an embodiment showing a case where all BWPs are used for sensing transmission mode without communication.

Finally, the sixth time block (519) illustrates an embodiment where all BWPs of the carrier are used for communication transmission mode, but one (or more) BWP (for example, BWP *b* ) uses SC (Single Carrier) or SC-like based transmission instead of OFDM-based transmission. In this case, guard bands (521, 523) are placed on both sides of BWP *b* to prevent interference due to loss of orthogonality with other OFDM-based BWP/BWPs.

Additionally, if the purpose of SC-based communication transmission mode is to enable communication even with severe time-selective phase distortion (e.g., carrier frequency offset, phase noise, and so on), guard bands (521, 523) must be placed on both sides of BWP *b*.

Another reason for placing these guard bands (521, 523) is to prevent interference with adjacent channels, as this type of SC wireless transmission method inherently has side-lobes in its power spectral density that are not significantly smaller than the main-lobe compared to OFDM methods.

In summary, the BWP distribution multiplexing method for communication and sensing shown in FIG. 5 relates to Targets (i.e., UEs) synchronizing and accessing the ICAS system to perform either communication only, simultaneous transmission/reception communication and sensing, or simultaneous transmission/reception communication with sensing and identification. A detailed explanation of simultaneous sensing and identification will be provided separately later.

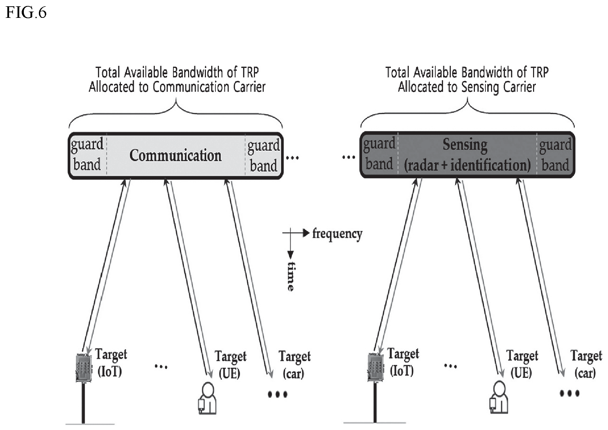

FIG. 6 illustrates an example of carrier distribution multiplexing method for communication and sensing according to an embodiment of the present disclosure.

Referring to FIG. 6, instead of dividing communication and sensing temporally or spectrally within a single carrier, they can be divided by carrier units in frequency. For example, frequency bands from 6 GHz to 12 GHz can be allocated as carriers for communication, while frequency bands of 24 GHz, 77 GHz, 79 GHz, or 92 GHz can be allocated as carriers for sensing.

Note that the multiplexing method for multiple communication transmission modes within the carrier used for communication in the embodiment of FIG. 6 is omitted here as it was already mentioned in the embodiment of FIG. 5.

Additionally, what differentiates the multiplexing method embodiment of FIG. 6 from conventional technology is that targets synchronize and access the ICAS system to perform either simultaneous transmission/reception communication and sensing, or simultaneous transmission/reception communication with sensing and identification. A detailed explanation of simultaneous sensing and identification will be provided separately later.

Hereinafter, based on FIG. 3, this disclosure explains the procedure from UE1's access to the ICAS system to sensing among multiple TRPs under the ICAS system.

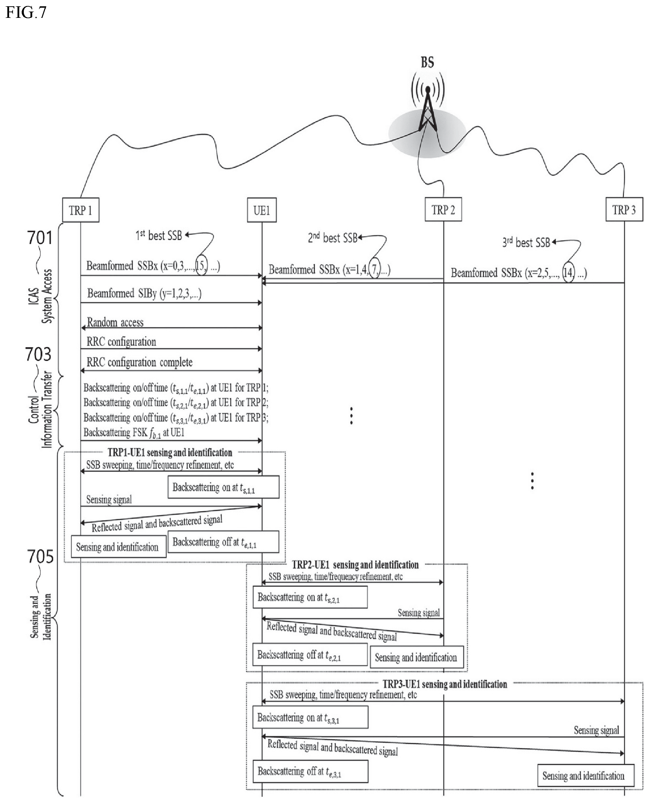

FIG. 7 illustrates a signal flow diagram from ICAS system access to TDM-based sensing between TRPs according to an embodiment of the present disclosure.

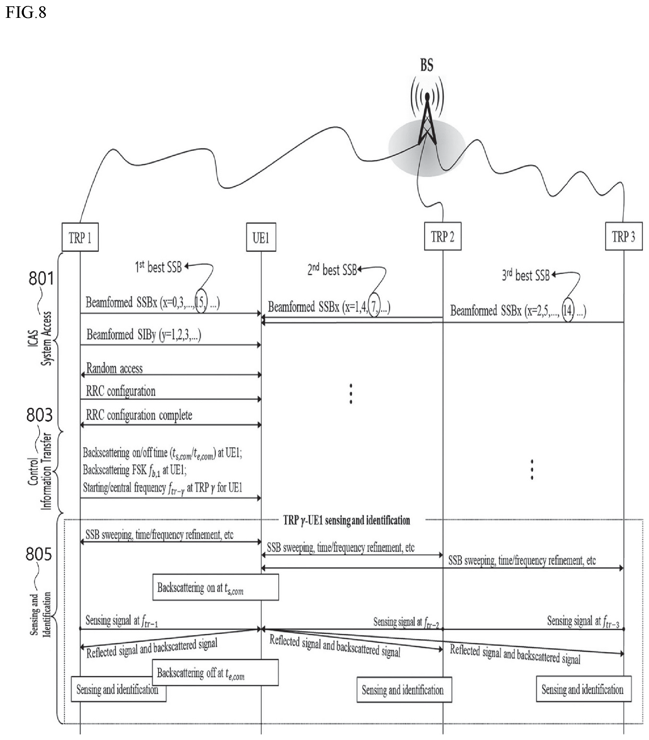

FIG. 8 illustrates a signal flow diagram from ICAS system access to Full/Partial FDM-based sensing between TRPs according to an embodiment of the present disclosure.

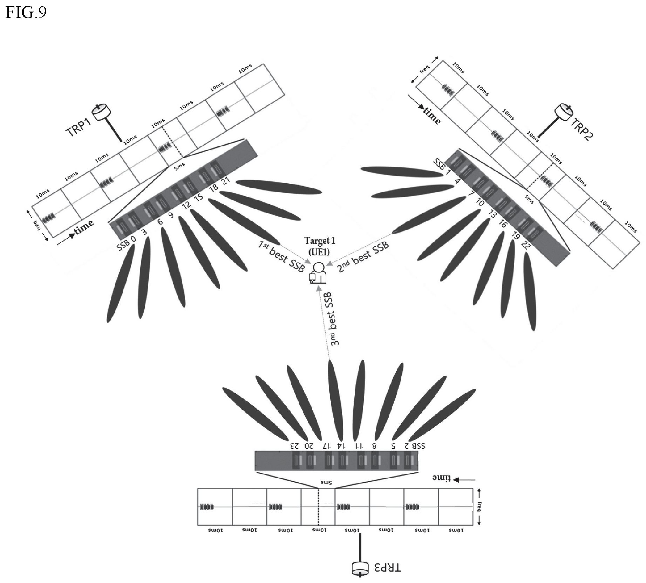

FIG. 9 illustrates an example of a method for securing LoS across multiple TRPs according to an embodiment of the present disclosure.

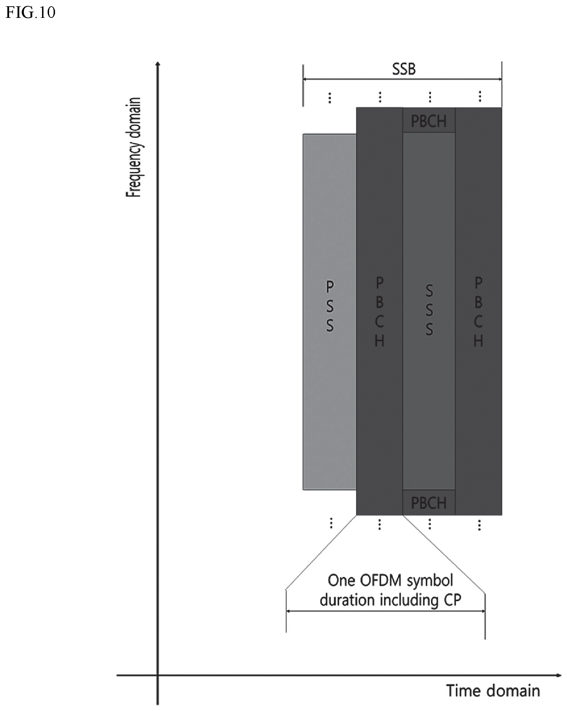

FIG. 10 illustrates an example of time and frequency structure of synchronization signal block according to various embodiments of the present disclosure.

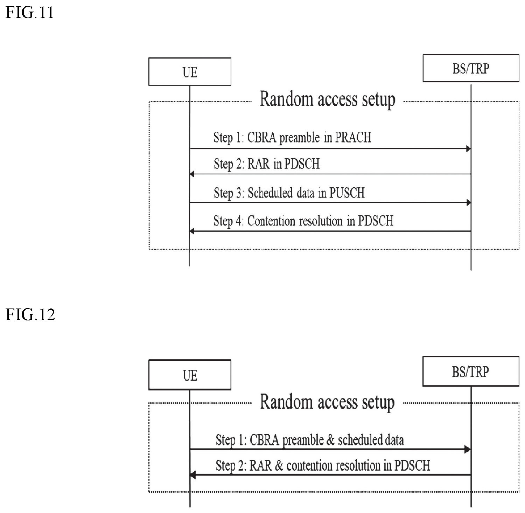

FIG. 11 illustrates an example of 4-step contention-based random access procedure according to various embodiments of the present disclosure.

FIG. 12 illustrates an example of 2-step contention-based random access procedure according to various embodiments of the present disclosure.

First, referring to FIG. 7 and FIG. 8, as shown in ICAS system access in FIG. 3, UE1 (i.e., Target 1), which desires simultaneous sensing and identification, can perform system access including synchronization and communication link setup to the ICAS system managed by TRP 1, enabling TRP 1 to recognize UE1, as follows (701, 801).

Specifically, as shown in FIG. 7 through FIG. 9, UE1 can perform SSB beam measurement on beamformed SSBs (Synchronization Signal Blocks) transmitted by each TRP. The detailed content regarding this is as follows.

According to one embodiment, when following the embodiment of FIG. 5, beamformed SSBs are SSB swept in specific time domains and all or part of frequency domains of BWP(s) for Communication, and when following the embodiment of FIG. 6, they can be SSB swept in specific time domains and all or part of frequency domains of carrier(s) for Communication. Additionally, cases where beamformed SSBs are carried on BWP(s) or carrier(s) for Sensing are also included within the scope of this disclosure.

The aforementioned beamformed SSBs, as shown in FIG. 7 through FIG. 9, may refer to SSBs carried in the aforementioned time domain or frequency domain under beams that are formed by dividing the spatial domain managed by the TRP, generating beams to cover the divided areas, and forming these beams.

According to one embodiment, as a result of performing SSB beam measurement, in this embodiment of the disclosure, it can be assumed that SSB 15 was selected as the 1st best SSB, SSB 7 as the 2nd best SSB, and SSB 14 as the 3rd best SSB, in order of good reception quality.

Additionally, according to one embodiment, in the embodiments of FIG. 7 and FIG. 8, to allow UE1 to recognize TRPs just by selecting SSBs, TRP 1 can sweep with SSB IDs starting from 0 and increasing by 3. TRP 2 can sweep with SSB IDs starting from 1 and increasing by 3. TRP 3 can sweep with SSB IDs starting from 2 and increasing by 3. In other words, it can be assumed that different SSB IDs are applied for each TRP. Furthermore, one embodiment of this disclosure may also include within its scope the sharing and application of all SSB IDs across TRPs.

For example, the time and frequency structure of SSB specified in 5G NR can be illustrated as shown in FIG. 10. Specifically, SSB consists of 4 OFDM symbols and can be composed of PSS (Physical Synchronization Signal), SSS (Secondary Synchronization Signal) physical signal, SSS (Secondary Synchronization Signal) physical signal, and PBCH (Physical Broadcast Channel) physical channel. The time domain signal of PSS can be used for estimating time and frequency synchronization and partial PCI (Physical Cell ID).

After performing time and frequency synchronization using PSS, UE1 can estimate the full PCI by converting to the frequency domain at the starting point excluding the CP (Cyclic Prefix) of the symbol corresponding to SSS shown in FIG. 10. In other words, SSS can be used to estimate the PCI. After estimating the PCI, it can acquire the scheduling position of SIB 1 (System Information Block 1) and the beam ID (collectively referred to as SSB ID) indicated by the aforementioned SSB by recovering the MIB (Master Information Block) in the frequency domain corresponding to PBCH.

In other words, SSB can be a predetermined time and frequency resource block that enables acquisition of time/frequency synchronization, PCI, beam ID, or SIB1 scheduling information.

Subsequently, it can synchronize with time or frequency to the 1st best SSB, acquire PCI, and obtain system-related information such as beam ID or SIB1 scheduling information. UE1 can recognize from this PBCH that its selected 1st best SSB is SSB 15. Afterward, it can acquire system-related information included in SIBy (y=2, 3, ...) from the PDSCH (Physical Downlink Shared Channel) channel carried on the scheduling resources of SIB1 indicated by PBCH and from subsequent consecutive PDSCH channels.

Subsequently, among these system-related information, according to the RO (Random Access Channel Occasion) position information indicated by the aforementioned SSB, namely the uplink time/frequency resource position information for random access, the 4-step CBRA (Contention Based Random Access) based setup procedure mentioned in FIG. 11 can be performed at the RO position indicated by the aforementioned SSB as follows:
In step 1, UE1 can randomly select one of the total preambles provided by the TRP, and transmit the selected preamble to the TRP through PRACH (Physical Random Access Channel). At this time, the beam direction follows the reciprocal uplink direction of the beam direction when receiving signals (e.g., SSB) in downlink, and the resource where the aforementioned preamble transmitted by UE1 to TRP is based on the previously acquired association between SSB and RACH (Random Access Channel) information (i.e., RO), and TRP can estimate UE1's propagation delay time using the aforementioned preamble.
In step 2, TRP can determine the presence of a preamble in the signal received through PRACH. The preamble can be randomly selected and transmitted by UE1. Therefore, it's impossible to identify which UE transmitted the preamble through preamble detection, and even if a preamble is detected, it's impossible to determine how many UEs used the detected preamble. In step 2, TRP can transmit a RAR (Random Access Response) based on the detected preamble index to UE1 through PDSCH. The RAR may include preamble index, TA (Timing Advance/Adjustment/Alignment) value, uplink grant information, or temporary C-RNTI (Cell Radio Network Temporary Identifier) value.
In step 3, UE1 can transmit a connection request message (or scheduling request message) and terminal-specific identification ID through PUSCH (Physical Uplink Shared Channel) to TRP using the uplink radio resources indicated by the uplink grant information included in the RAR, applying the aforementioned temporary C-RNTI. At this time, if there is more than one UE that transmitted the same preamble in step 1 (i.e., if preamble collision occurs), all UEs that transmitted the same preamble will transmit messages using the same radio resources by referring to the same RAR, which may result in collision.
   In other words, UEs that transmitted the same preamble in step 1 will consequently experience resource collision when transmitting step 3 messages. As part of the procedure to verify whether their step 3 message experienced collision or was successfully decoded, each UE can activate a contention resolution timer when transmitting the step 3 message.
In step 4, TRP decodes the received step 3 message and can transmit an acknowledgement message through PDSCH for successfully decoded messages. A terminal that receives an acknowledgement message before the contention resolution timer activated in step 3 expires can be considered to have successfully performed random access. The terminal can consider the temporary C-RNTI as its C-RNTI for continued use in the system connection state. Otherwise, if UE1 does not receive any acknowledgement message until the contention resolution timer expires, it determines that the message transmitted in step 3 failed to decode due to reasons such as collision, and may retry the random access procedure after performing backoff. TRP can define a maximum number of random access attempts to prevent random access channel congestion. If a UE fails to succeed in random access within the maximum number of attempts, the UE may abandon random access and restart from downlink synchronization.

Additionally, according to one embodiment, to reduce random access time instead of 4-step CBRA, the 2-step CBRA-based setup procedure shown in FIG. 12 can be performed as follows.

In step 1, one preamble randomly selected from the total preambles can be transmitted through PRACH. The terminal can simultaneously transmit a message (connection request message) to the TRP through pre-allocated uplink radio resources (i.e., uplink shared channel).

In step 2, TRP determines whether the preamble transmitted in step 1 is detected and whether the received message is successfully decoded, and can transmit different types of messages to UE1 according to the results. This leads to different subsequent procedures. Specifically, if TRP fails to detect the preamble, TRP may not perform any action. That is, it doesn't even check for message reception through uplink radio resources associated with the preamble. Consequently, TRP provides no response for cases where the preamble is not detected. Accordingly, UE1 will retry random access because it received no message from TRP. This is called Case 1. If TRP normally detects the preamble and successfully decodes the message from the associated uplink radio resources, it can transmit a message including successful RAR and C-RNTI to UE1 through PDSCH. This message serves as an Acknowledgement, and UE1 receiving this can successfully terminate random access. This is called Case 2. If TRP normally detects the preamble but fails to successfully decode the message from the associated uplink radio resources, it can transmit a message including fallback RAR to UE1 through PDSCH. In this case, UE1 receiving the message may retransmit the intended message using the uplink radio resources indicated by the uplink grant information included in the fallback RAR.

TRP1 requests RRC, and when UE1 receives this and completes RRC configuration with TRP1, the series of system connections is completed, after which UE1 enters system connected state and can communicate through TRP1. In the aforementioned communication link, TRP1 indicates to UE1 the DL (Downlink), UL (Uplink), or Joint TCI (Transmission Control Indicator) that specify transmission configuration and scheduling resource positions for data transmission/reception, and can exchange beamformed data in downlink and uplink respectively according to DCI (Downlink Control Indicator) and UCI (Uplink Control Indicator) transmitted on PDCCH (Physical Downlink Control Channel).

Additionally, while communicating in the aforementioned RRC-connected state, UE1 can report SSB-based adjacent beam estimation results to TRP1 through RRC signalling mainly using PDSCH and PUSCH channels. At this time, UE1 reports to TRP1 that SSB 7 belonging to TRP2 is the 2nd best SSB and SSB 14 belonging to TRP3 is the 3rd best SSB. Through this report, TRP1 can recognize that the link quality is sufficient to configure additional links between UE1 and TRP2 and TRP3.

Next, referring to FIG. 7 and FIG. 8, TRP1 can deliver control information such as FSK-based backscattering on/off time information, FSK information, starting/central frequency information through all possible control channel(s) to prepare UE1 for sensing and identification (703, 803). The detailed assumptions and specific contents regarding this are as follows.

Below, we assume multiple TRPs such as TRP 1, TRP 2, or TRP 3, and assume that TRP 1 (or TRP 2, TRP 3) delivers control information about the TRPs to UE1. However, delivering control information only about a single TRP, namely TRP 1, to UE1 may also be included within the scope of this disclosure.

First, this disclosure may include content about FSK-based backscattering on/off time information. When following the TRP-based TDM (Time Division Multiplexing) procedure shown in FIG. 7, for TRP 1, on time *t*_{*s*,1,1} and off time *t*_{*e*,1,1} can be delivered to UE1. For TRP 2, on time *t*_{*s*,2,1} and off time *t*_{*e*,2,1} can be delivered to UE1. For TRP 3, on time *t*_{*s*,3,1} and off time *t*_{*e*,3,1} can be delivered to UE1. Meanwhile, when following the TRP-based Full/Partial FDM (Frequency Division Multiplexing) procedure shown in FIG. 8, on time *t*_{*s*,*com*} and off time *t_{e,com}* common to TRP 1, TRP 2, and TRP 3 can be delivered to UE1.

Next, this disclosure may include information about FSK. As shown in FIG. 7 and FIG. 8, the frequency shift value *f*_{*b*,1} that UE1 should perform during FSK-based backscattering can be delivered to UE1. Here, the explanation of *f*_{*b*,1} can be referred to in the detailed description of FIG. 4 mentioned above.

Next, we can mention the starting/central frequency *f_{tr-γ}* information shown in FIG. 8. Here, starting/central frequency refers to the start or center frequency of the RF bandwidth when the transmission device performing sensing and identification transmits signals. When following the TRP-based Full/Partial FDM procedure shown in FIG. 8, *f*_{*tr-*1} for TRP 1, *f*_{*tr-*2} for TRP 2, and *f*_{*tr-*3} for TRP 3 can be delivered to UE1. Here, the value of *f_{tr-γ}* differs depending on whether it's Full FDM or Partial FDM.

In the case of Full FDM-based operation, the bandwidth used by each TRP for sensing and identification does not overlap (affect) with each other. In this case, *f_{tr-γ}* can be set so that the difference value between adjacent *f_{tr-γ}*s corresponds to the bandwidth.

Meanwhile, in the case of Partial FDM-based operation, to improve system frequency usage efficiency, partial overlap (influence) between bandwidths used by each TRP for sensing and identification can be allowed. In this case, *f_{tr-γ}* can be set so that the difference value between adjacent *f_{tr-γ}*s corresponds to a value smaller than the bandwidth.

Next, referring to FIG. 7 and FIG. 8, the sensing and identification process can be performed as follows (705, 805).

First, before performing FSK-based backscattering on, sensing and identification, and FSK-based backscattering off processes with TRP 1, UE1 can perform SSB sweeping with TRP 1 similarly or identically as mentioned above in the Sensing BWP shown in FIG. 5 or the Sensing carrier shown in FIG. 6. Through SSB sweeping with TRP1, the best SSB can be reselected to increase the probability of securing Line-of-Sight (LoS) between TRP 1 and UE1 and refine time and frequency synchronization. Additionally, if necessary, all possible operations that help with sensing and identification can be performed.

Next, UE1 can turn on the FSK-based backscattering function at time point *t*_{*s*,1,1} - Δ*t*₁, either exactly at *t*_{*s*,1,1} or to secure function switching time Δ*t*₁.

Next, as shown in sensing signal transmission in FIG. 3 and FIG. 7, at *t*_{*s*,1,1}, the transmitter (e.g., Tx radar) corresponding to TRP 1's transmission unit can transmit a sensing signal called *s*₁(*t*) through the antenna.

Next, as shown in Reception of Reflection and FSK-based Backscattered Signals in FIG. 3 and FIG. 7, when *s*₁(*t*) is transmitted, the receiver (e.g., Rx radar) corresponding to TRP 1's reception unit can receive *s*₁(*t - τ*₁) reflected back from UE1 and signals reflected back from various other objects. Here, *τ*₁ represents the RTD from the moment *s*₁(*t*) is transmitted from TRP 1 until it returns after being reflected from UE1. It should be noted that signals directly reflected from object surfaces generally contain clutter noise components that significantly reduce sensing accuracy, so removing these components is important.

Additionally, as shown in Reception of Reflection and FSK-based Backscattered Signals in FIG. 3, since UE1 performs FSK-based backscattering, it can backscatter incoming signals by shifting the frequency by *f*_{*b*,1}. Accordingly, TRP 1's receiver can receive *s*₁(*t - τ*₁)*e*^{*j*2*πf*¹*t*} FSK-based backscattered from UE1.

Next, as shown in Sensing and Identification in FIG. 3 and FIG. 7, TRP 1 can perform sensing and identification for UE1 using the FSK-based backscattered signals and reflected signals received from UE1 along with reflected signals from other objects, following the sensing procedures and methods described later. Additionally, as shown in FSK-based Backscattering Off in FIG. 3 and FIG. 7, to reduce battery consumption, UE1 can turn off its FSK-based backscattering function at time point *t*_{*e*,1,1} + Δ*t*₁, either exactly at *t*_{*e*,1,1} or to secure function switching time.

Next, as shown in FIG. 7, the sensing and identification processes between UE1 and TRP 2, and between UE1 and TRP 3 are identical to the aforementioned sensing and identification process between UE1 and TRP 1, except for the FSK-based backscattering function on/off times, so detailed explanation is omitted.

In the case of TDM-based operation shown in FIG. 7, for the sensing and identification process, the SSB sweeping, time/frequency refinement, etc. processes are not performed separately in TDM manner for each TRP, but rather are first performed for all of TRP 1, TRP 2, and TRP 3, and then the remaining processes are performed as shown in FIG. 7. Additionally, not performing the SSB sweeping, time/frequency refinement, etc. processes during the Sensing and Identification period shown in FIG. 7 may also be included within the scope of this disclosure.

In the case of Full/Partial FDM-based operation shown in FIG. 8, UE1 can perform the following processes for each TRP.

First, before performing FSK-based backscattering on, sensing and identification, and FSK-based backscattering off processes for each TRP, UE1 can perform the same SSB sweeping, time/frequency refinement, etc. processes as explained in the embodiment of FIG. 7 in TDM manner for each TRP. The detailed explanation of this process is omitted.

Next, UE1 can turn on the FSK-based backscattering function at time point *t_{s,com} -* Δ*t*₁, either exactly at *t_{s,com}* or to secure function switching time Δ*t*₁*.*

Next, as shown in sensing signal transmission in FIG. 3 and FIG. 8, at *t_{s,com}*, the transmitter corresponding to each TRP's transmission unit can transmit a sensing signal called *s_{γ}*(*t*) through the antenna, adjusted to the starting/central frequency *f_{tr-γ}* for each TRP.

Next, as shown in Reception of Reflection and FSK-based Backscattered Signals in FIG. 8, TRP 1's receiver can receive TRP 1's signal *s*₁(*t* - *τ*₁) reflected from UE1, TRP 2's signal *s*₂(*t* - *τ*₂₁) reflected from UE1, TRP 3's signal*s*₃(*t* - *τ*₃₁) reflected from UE1, and signals reflected from various other objects. Here, *τ*₂₁ represents the delay from when *s*₂(*t*) is transmitted from TRP 2 until it arrives at TRP 1 after being reflected from UE1. *τ*₃₁ represents the delay from when *s*₃(*t*) is transmitted from TRP 3 until it arrives at TRP 1 after being reflected from UE1.

Additionally, TRP 1's receiver can receive TRP 1's signal *s*₁(*t - τ*₁)*e*^{*j*2*πf*¹*t*} FSK-based backscattered from UE1. It can receive TRP 2's signal *s*₂(*t* - *τ*₂₁)*e*^{*j*2*πf*¹*t*} FSK-based backscattered from UE1 and arriving at TRP 1. It can receive TRP 3's signal *s*₃(*t* - *τ*₃₁)*e*^{*j*2*πf*¹*t*} FSK-based backscattered from UE1 and arriving at TRP 1.

Next, as shown in Sensing and Identification in FIG. 8, each of TRP 1, TRP 2, and TRP 3 can perform sensing and identification for UE1 using the reflected signals and FSK-based backscattered signals received from UE1, following the sensing procedures and methods described later. Additionally, as shown in FSK-based Backscattering Off in FIG. 8, to reduce battery consumption, UE1 can turn off its FSK-based backscattering function at time point *t_{e,com}* + Δ*t*₁, either exactly at *t_{e,com}* or to secure function switching time.

In the case of Full/Partial FDM-based operation shown in FIG. 8, it is also within the scope of this disclosure that the SSB sweeping, time/frequency refinement, etc. processes are not performed during the Sensing and Identification period shown in FIG. 8.

Hereinafter, under the ICAS system, referring to FIG. 7 and FIG. 8, we can explain the first TRP transceiver block diagram in analog and digital domains.

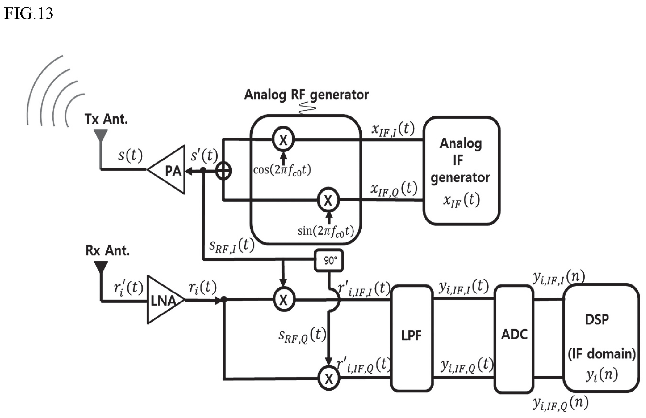

FIG. 13 illustrates an example of the first transceiver block diagram according to an embodiment of the present disclosure.

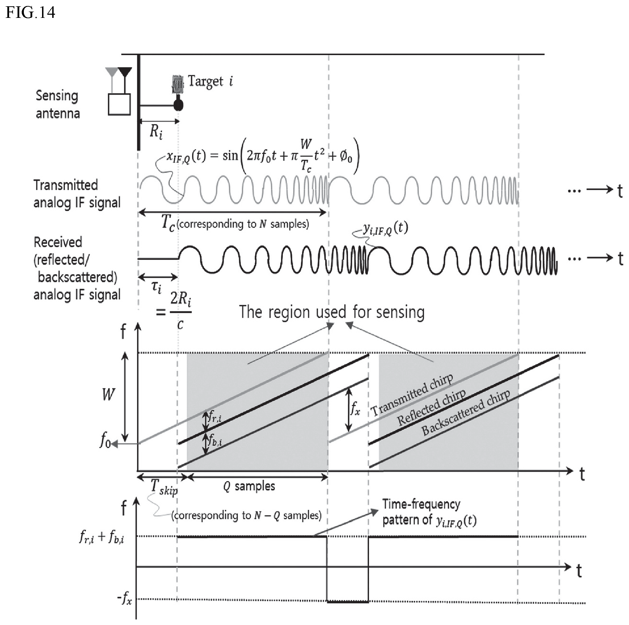

FIG. 14 illustrates an example of one transceiver signal waveform for the first transceiver block diagram according to an embodiment of the present disclosure.

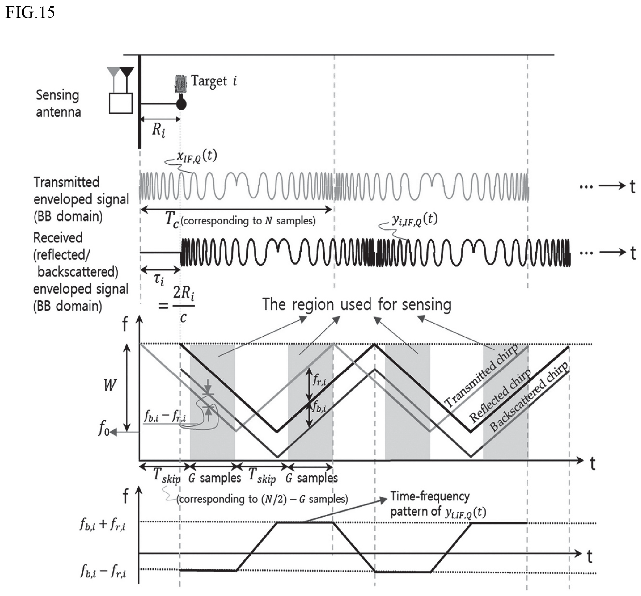

FIG. 15 illustrates another example of transceiver signal waveform for the first transceiver block diagram according to an embodiment of the present disclosure.

Referring to FIG. 13, FIG. 14, and FIG. 15, the sensing signal can be generated analogically in either IF or RF domain. Note that in this embodiment of the disclosure, it is assumed to be generated in the IF domain as an example.

The transceiver block diagram of this disclosure is as shown in FIG. 13, and the block description according to signal flow is as follows. First, the sensing signal can be generated in the Analog IF generator block of the transmitter. The real and imaginary components of the generated signal can output RF signals through the Analog RF generator block. The output signal can be transmitted through the antenna after passing through the PA (Power Amplifier). Correspondingly, the signal input through the antenna at the receiver can pass through the LNA (Low Noise Amplifier) block. The processed signal is mixed with the real component signal generated in the transmitter's Analog RF generator block and can generate a real component signal in the digital IF domain after passing through LPF and ADC. The generated signal can flow into the DSP (Digital Signal Processor) in the IF domain. Additionally, the signal that passed through the aforementioned LNA can be mixed with the imaginary component signal generated in the transmitter's Analog RF generator block. The mixed signal can generate an imaginary component signal in the digital IF domain after passing through LPF and ADC. The generated signal can flow into the DSP in the IF domain. The real and imaginary component signals (i.e., complex signals) in the digital IF domain can be digitally processed to perform the sensing and identification proposed below in the DSP.

The signals at the input and output of the aforementioned blocks can be mathematically modeled as follows.

First, one sensing signal x_IF(t) at the output of the Analog IF generator and its real component signal *x_{IF,I}*(*t*) and imaginary component signal *x_{IF,Q}*(*t*) can be expressed as Equation 3, Equation 4, and Equation 5. ${x}_{IF} \left(t\right) = {e}^{j \left(2{πf}_{0}t+π\frac{W}{{T}_{c}}{t}^{2}+{∅}_{0}\right)}$ ${x}_{IF , I} \left(t\right) = cos \left(2{πf}_{0}t+π\frac{W}{{T}_{c}}{t}^{2}+{∅}_{0}\right)$ ${x}_{IF , Q} \left(t\right) = sin \left(2{πf}_{0}t+π\frac{W}{{T}_{c}}{t}^{2}+{∅}_{0}\right)$

As shown in FIG. 14, in Equation 3, *f*₀ represents the starting frequency for up-chirping, *T_{c}* represents the period of this chirp signal, *W* represents the bandwidth of this chirp signal, Ø₀ represents the phase distortion occurring at the Analog IF generator output, t represents time in analog concept, and I and Q represent real component (In-phase) and imaginary component (Quadrature-phase) respectively.

As shown in Equation 3 and FIG. 14, the sensing signal can be an up-chirp type analog signal. For convenience of explanation, FIG. 14 shows the imaginary component signal *x_{IF,Q}*(*t*) of the sensing signal as an example. To improve the accuracy of sensing (or ranging), this disclosure can generate the chirp signal repetitively *Nᵣ* times. In addition to the aforementioned single sensing signal, a down-up-chirp type analog signal as shown in FIG. 15 can be used as a sensing signal. Furthermore, an up-down-chirp type analog signal, which is just the reversed order of down and up in FIG. 15, can also be used as a sensing signal, and all possible signals that improve sensing accuracy can be included within the scope of this disclosure.

Next, the signal *s*'(*t*) after passing through the Analog RF generator can be expressed as Equation 6. $s ′ \left(t\right) = Re \left\{{x}_{IF}^{∗}\left(t\right){e}^{j 2 {πf}_{c 0} t}\right\} = Re \left\{{e}^{j \left(2{πf}_{c 0}t-2{πf}_{0}t-π\frac{W}{{T}_{c}}{t}^{2}+{∅}_{1}\right)}\right\}$

Here, ${x}_{IF}^{∗} \left(t\right)$ represents the conjugating signal of *x_{IF}*(*t*), and *f*_{*c*0} is the frequency that makes the given carrier frequency *t_{c}*, which can be given as *f*_{*c*0} *= f_{c} + f*₀ *- W*/2*.* Ø₁ represents the phase distortion that occurs after passing through the Analog RF generator and combiner.

Next, the signal *s*(*t*) after passing through the PA can be expressed as Equation 7. $s \left(t\right) = cos \left(2π\left({f}_{c 0}-{f}_{0}\right)t-π\frac{W}{{T}_{c}}{t}^{2}+{∅}_{2}\right)$

Here, Ø₂ represents the phase distortion that occurs after passing through the PA.

Next, ${r}_{i}^{′} \left(t\right)$ is the RF signal of UE (or Target) *i* incoming from the receiving antenna and can be expressed as Equation 8. ${r}_{i}^{′} \left(t\right) = {A}_{i} s \left(t-{τ}_{i}\right)$

Here, *Aᵢ* represents the received signal strength of UE *i*, and *τᵢ* represents the RTD (Round-Trip Delay) of signals reflected or backscattered from UE *i*. *τᵢ* can be expressed as *τᵢ* = 2*Rᵢ*/*c*, where *Rᵢ* represents the distance between the transmitter and UE (or Target) *i*, and c represents the speed of light.

Next, *rᵢ*(*t*) is the RF signal after passing through the LNA and can be expressed as Equation 9. ${r}_{i} \left(t\right) = {A}_{i} cos \left(2π\frac{W}{{T}_{c}}{τ}_{i}t+2π\left({f}_{c 0}-{f}_{0}\right)t-2π\left({f}_{c 0}-{f}_{0}\right){τ}_{i}-π\frac{W}{{T}_{c}}\left({t}^{2}+{τ}_{i}^{2}\right)+{∅}_{3}\right)$

Here, Ø₃ represents the phase distortion that occurs after passing through the LNA.

Next, *s_{RF,I}*(*t*) and *s_{RF,Q}*(*t*) represent the real component signal and imaginary component signal of the RF generator output respectively, and can be expressed as Equation 10 and Equation 11. ${s}_{RF , I} \left(t\right) = cos \left(2π\left({f}_{c 0}-{f}_{0}\right)t-π\frac{W}{{T}_{c}}{t}^{2}+{∅}_{1}\right)$ ${s}_{RF , Q} \left(t\right) = sin \left(2π\left({f}_{c 0}-{f}_{0}\right)t-π\frac{W}{{T}_{c}}{t}^{2}+{∅}_{1}\right)$

Next, *r'_{i,IF,I}*(*t*) represents the signal after *rᵢ*(*t*) and *s_{RF,I}*(*t*) pass through the mixer, and can be expressed as Equation 12. $\begin{matrix}r {′}_{i , IF , I} \left(t\right) \\ = \frac{{A}_{i}}{2} \left(\begin{matrix}cos \left(2π\frac{W}{{T}_{c}}{τ}_{i}t+4π\left({f}_{c 0}-{f}_{0}\right)t-2π\left({f}_{c 0}-{f}_{0}\right){τ}_{i}-π\frac{W}{{T}_{c}}\left(2{t}^{2}+{τ}_{i}^{2}\right)+{∅}_{3}+{∅}_{1}\right) \\ + cos \left(2π\frac{W}{{T}_{c}}{τ}_{i}t-2π\left({f}_{c 0}-{f}_{0}\right){τ}_{i}-π\frac{W}{{T}_{c}}{τ}_{i}^{2}+{∅}_{3}-{∅}_{1}\right)\end{matrix}\right)\end{matrix}$

Next, *r'_{i,IF,Q}*(*t*) represents the signal after *rᵢ*(*t*) and *s_{RF,Q}*(*t*) pass through the mixer, and can be expressed as Equation 13. Here, it should be noted that -s_{RF,Q}(t) can be applied instead of *s_{RF,Q}*(*t*)*.* $\begin{matrix}r {′}_{i , IF , Q} \left(t\right) = \\ \frac{{A}_{i}}{2} \left(\begin{matrix}sin \left(2π\frac{W}{{T}_{c}}{τ}_{i}t+4π\left({f}_{c 0}-{f}_{0}\right)t-2π\left({f}_{c 0}-{f}_{0}\right){τ}_{i}-π\frac{W}{{T}_{c}}\left(2{t}^{2}+{τ}_{i}^{2}\right)+{∅}_{3}+{∅}_{1}\right) \\ - sin \left(2π\frac{W}{{T}_{c}}{τ}_{i}t-2π\left({f}_{c 0}-{f}_{0}\right){τ}_{i}-π\frac{W}{{T}_{c}}{τ}_{i}^{2}+{∅}_{3}-{∅}_{1}\right)\end{matrix}\right)\end{matrix}$

Next, the real component signal *y_{i,IF,I}*(*t*) and imaginary component signal *y_{i,IF,Q}*(*t*) shown in FIG.14 after passing through the LPF can be expressed as Equation 14 and Equation 15. ${y}_{i , IF , I} \left(t\right) \approx \frac{{A}_{i}}{2} cos \left(2π\frac{W}{{T}_{c}}{τ}_{i}t+{∅}_{i}\right)$ ${y}_{i , IF , Q} \left(t\right) \approx \frac{{A}_{i}}{2} sin \left(2π\frac{W}{{T}_{c}}{τ}_{i}t+{∅}_{i}\right)$

Here, Ø*ᵢ* represents the phase distortion of UE i that occurs after passing through the LPF.

Finally, the complex signal *yᵢ*(*n*) consisting of the real component *y_{i,IF,I}*(*n*) and imaginary component *y_{i,IF,Q}*(n) in the digital IF domain after passing through the ADC can be expressed as follows: ${y}_{i} \left(n\right) = {y}_{i , IF , I} \left(n\right) + {jy}_{i , IF , Q} \left(n\right) \approx \frac{{A}_{i}}{2} ⋅ {e}^{j \left(2π\frac{W}{{T}_{c}}{τ}_{i}\left({nT}_{s}\right)+{∅}_{i}\right)} , n = 0 , 1 , … , N - 1 , … , \left(\begin{matrix}{N}_{r} - \\ 1\end{matrix}\right) N , … , {N}_{r} N - 1 .$

The *yᵢ*(*n*) in Equation 16 can be used as an input signal for sensing and identification in the DSP block.

Hereinafter, under the ICAS system, based on FIG. 7 and FIG.8, this disclosure presents the second TRP transceiver block diagram of analog and digital domains as follows.

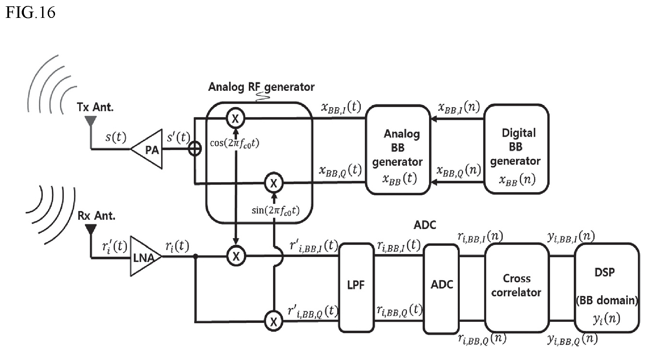

FIG. 16 illustrates an example of a second transceiver block diagram according to an embodiment of this disclosure.

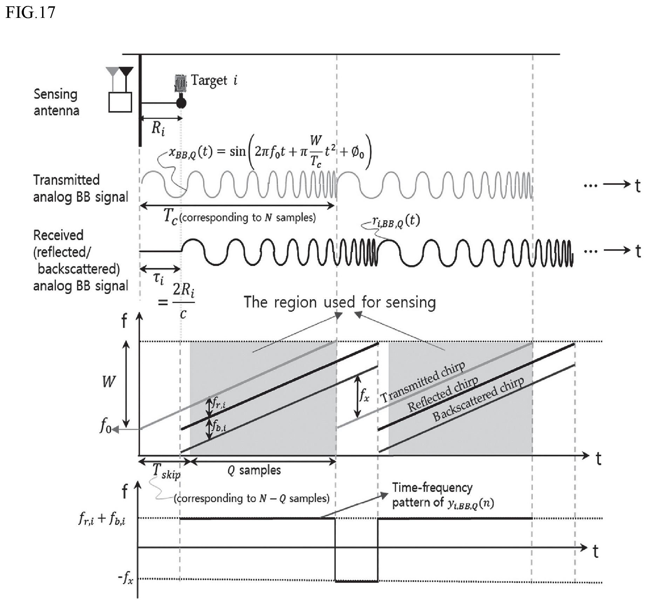

FIG. 17 illustrates an example of one transceiver signal waveform for the second transceiver block diagram according to an embodiment of this disclosure.

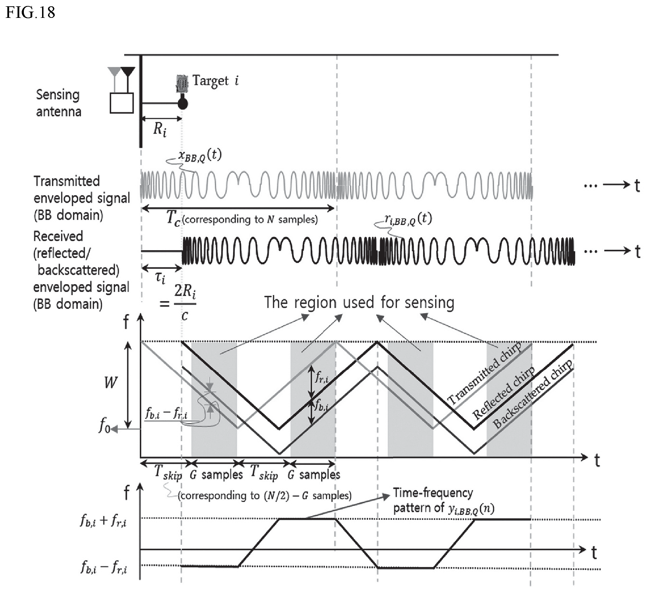

FIG. 18 illustrates another example of a different transceiver signal waveform for the second transceiver block diagram according to an embodiment of this disclosure.

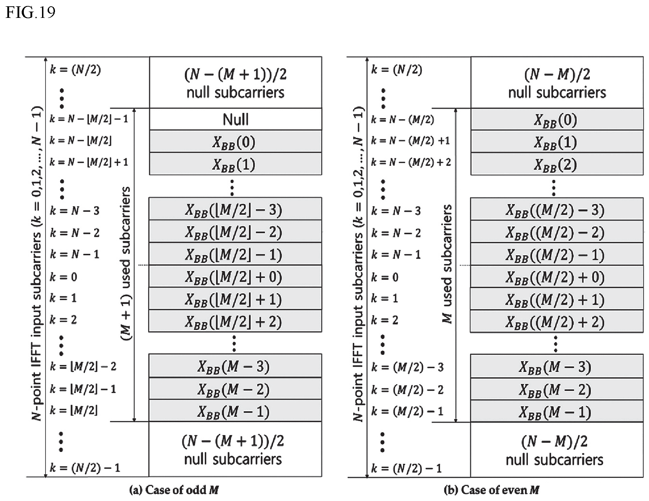

FIG. 19 illustrates a mapping diagram of IFFT input for digital baseband frequency domain sensing signals according to an embodiment of this disclosure.

Referring to FIG. 16, FIG. 17, FIG. 18, and FIG. 19, the sensing signal can be digitally generated in the baseband (BB) domain. The advantage of generating the sensing signal in the digital BB domain is that it can utilize the existing transceiver structure and operational methods between modules/components in the Analog BB domain, Digital/Analog IF domain, and Analog RF domain, which are adopted in most standards.

Furthermore, when generating the sensing signal in the digital BB domain, as explained in the basic concept in FIG. 5, it has the advantage of increasing system efficiency by enabling multiplexing with SC-based transmission mode and OFDM-based transmission mode. For example, when using SC-based sensing signals in the digital BB domain for the first time block in FIG. 5, multiplexing can be performed as follows:
First, guard bands can be placed on both sides of the bandwidth occupied by the sensing signal (corresponding to BWP in FIG. 5's example) to generate the sensing signal in the time domain without affecting other BWPs. Additionally, in other BWPs, OFDM-based communication signals can be allocated to the available frequency domain while nulling the BWP occupied by the aforementioned SC-based sensing signal, and then applying IFFT across the entire carrier to generate time domain signals. Subsequently, the sensing signal and communication signal generated in the time domain can be added together and transmitted/received through the Analog BB domain, Digital/Analog IF domain, and Analog RF domain.

For example, when using OFDM-based sensing signals in the digital BB domain for the first time block in FIG. 5, multiplexing can be performed as follows:
First, guard bands can be placed on both sides of the bandwidth occupied by the sensing signal (corresponding to BWP in FIG. 5's example) to prevent interference with other BWPs in the frequency domain. Additionally, in other BWPs, OFDM-based communication signals can be allocated to the available frequency domain, followed by IFFT across the entire carrier to generate time domain signals. These signals can then be transmitted/received through the Analog BB domain, Digital/Analog IF domain, and Analog RF domain in other BWPs. Therefore, if sensing signals can be generated using OFDM-based rather than SC-based approaches in the digital BB domain for efficient sensing and identification, it offers the advantage of increasing system operational efficiency while reducing complexity during multiplexing with communication signals and sensing and identification.

The transceiver block diagram of this disclosure is shown in FIG. 16, and the block description according to signal flow is as follows:
First, the sensing signal is generated in the Digital BB generator block of the transmitter, and the real and imaginary components of the generated signal pass through the Analog BB generator block and are input to the Analog RF generator to output RF signals. The output signal passes through the PA and can be transmitted through the antenna. Correspondingly, the signal received through the antenna at the receiver end can pass through the LNA block. The processed signal is mixed with the real component signal generated in the transmitter's Analog RF generator block and passes through LPF and ADC to generate a real component signal in the digital BB domain. The generated signal can flow into the DSP in the BB domain. Additionally, the signal that passed through the LNA is mixed with the imaginary component signal generated in the transmitter's Analog RF generator block and passes through LPF and ADC to generate an imaginary component signal in the digital BB domain. The generated signal can pass through the Cross correlator and flow into the DSP in the BB domain. The real and imaginary component signals (i.e., complex signals) in the digital BB domain can be digitally processed to perform the sensing and identification proposed below in the DSP.

The signals at the input and output of the aforementioned blocks can be mathematically modeled as follows. First, one sensing signal *x_{BB}*(*n*) at the Digital BB generator output and its real component signal *x_{BB,I}*(*n*) and imaginary component signal *x_{BB,Q}*(*n*) can be expressed as Equation 17. ${x}_{BB} \left(n\right) = {x}_{BB , I} \left(n\right) + {jx}_{BB , Q} \left(n\right) , n = 0 , 1 , … , N - 1$

Here, n represents the digital sample time index concept for signals sampled in the time domain. *N* can represent the maximum sample time index value corresponding to the previously mentioned chirp period *T_{c}.* When *x_{BB}*(*n*) is an OFDM-based signal, *N* can represent the IFFT size applied when converting frequency domain sensing signals (or communication signals) to the time domain.

When defining *x_{BB}*(*n*) based on SC in the digital BB domain, it can be an up-chirp or down-chirp type signal expressed as Equation 18 as an example. Additionally, signals in the form of up-down-chirp, down-up-chirp, or any other possible combinations of chirps can be candidates for *x_{BB}*(*n*)*.* ${x}_{BB} \left(n\right) = exp \left\{j2π\left(\pm {f}_{0}\left({nT}_{s}\right)\pm \frac{W}{2 {NT}_{s}}{\left({nT}_{s}\right)}^{2}\pm {∅}_{0}\right)\right\} , n = 0 , 1 , ⋯ , N - 1$

Here, *Tₛ* is the inverse of the sampling rate, *NTₛ* is the chirp period *T_{c}*, and Ø₀ represents an arbitrary fixed phase.

Additionally, when defining *x_{BB}*(*n*) based on OFDM in the digital BB domain, the frequency domain C-signal proposed in Equation 19 can be an example. ${X}_{BB} \left(k\right) = exp \left(j\frac{2 π \left({ak}^{2}+bk+c\right)}{M}\right) , k = 0 , 1 , … , M - 1$

Here, parameters *a*, *b,* and *c* are basically arbitrary real values, and all other possible forms of values can be included within the scope of this disclosure. Additionally, *X_{BB}*(*k*) in Equation 19 may or may not become a chirp-type signal as in Equation 18, depending on the parameter values set.

Specifically, when M is even, in Equation 18, we can set *f*₀ = 0, *u = WTₛ*, and Ø₀ = 0. The chirp signal with *n* replaced by *k* and *N* replaced by *M* can be equivalently applied when *a =* ±1/2 (or *a =* ±(*M -* 1)/2 ), *b =* 0, and *c* = 0 are applied in Equation 19.

Additionally, when *M* is odd, in Equation 18, we can set *f*₀ *= W*/*(2M), u = WTₛ*, and Ø₀ = 0. The chirp signal with n replaced by k and N replaced by M can be equivalently applied when *a* = ±1/2 (or *a =* ±(*M* - 1)/2), *b* = 11/2, and *c* = 0 are applied in Equation 19.

Assuming that the time domain signal for *X_{BB}*(*k*) in Equation 19 is converted from only the frequency domain *X_{BB}*(*k*) signal to the time domain, *X_{BB}*(*k*) mapped to the IFFT input is as shown in FIG. 19, where *N* represents the IFFT size. When IFFT is performed on the signal mapped as shown in FIG. 9, a sensing signal in the digital BB time domain can be generated.

Also, when *X_{BB}*(*k*) assigned sensing BWP and communication BWPs are multiplexed on a single carrier as in the first time block of FIG. 5, the center subcarrier of the carrier is mapped to *k* = 0 as shown in FIG. 19, and IFFT is performed by mapping the IFFT input to generate the time domain signal. In this case, the time domain sensing signal may overlap with the time domain communication signals.

Additionally, when generating sensing signals based on OFDM in the digital BB domain, signals can be generated in the time domain using SC-based up-chirp, down-chirp, down-up-chirp, up-down chirp forms, or any other possible combinations of chirps. These signals can then be applied as OFDM-based frequency domain sensing signals, either directly or after transformation into frequency domain signals. In this case, the time domain signal must be designed so that it does not affect resources other than those designated for sensing in the frequency domain. The scope of this disclosure includes all possible time domain signals and their corresponding frequency domain signals that satisfy these design requirements.

Furthermore, when generating sensing signals based on OFDM in the digital BB domain, a Cyclic Prefix (CP) is typically added in OFDM transmission mode according to regulations. However, to focus on the sensing signal, the addition of CP may not be mentioned.

Next, *X_{BB}*(*t*) represents the output signal of the Analog BB generator and can be expressed as follows: ${x}_{BB} \left(t\right) = {\sum }_{n} {x}_{BB} \left(n\right) sinc \left(BW⋅t-n\right) = {x}_{BB , I} \left(t\right) + {jx}_{BB , Q} \left(t\right)$ ${x}_{BB , I} \left(t\right) \approx cos \left(2{πf}_{0}t+π\frac{BW}{{T}_{c}}{t}^{2}+{∅}_{0}\right)$ ${x}_{BB , Q} \left(t\right) \approx sin \left(2{πf}_{0}t+π\frac{BW}{{T}_{c}}{t}^{2}+{∅}_{0}\right)$

Here, Ø₀ represents the phase distortion that occurs after passing through the Analog BB generator. As shown in FIG. 16, *x_{BB,I}*(*t*) and *x_{BB,Q}*(*t*) represent the real component analog BB signal and imaginary component analog BB signal of *x_{BB}*(*t*), respectively. According to Equations 20, 21, and 22 and FIG. 17, the sensing signal generated in the digital domain and converted to the analog BB domain can be an up-chirp type analog signal. For convenience of explanation, FIG. 17 shows the imaginary component signal *x_{BB,Q}*(*t*) of the sensing signal as an example.

To improve the accuracy of sensing (or ranging), this disclosure can generate the chirp signal repeatedly *Nᵣ* times. It should be noted that in addition to the aforementioned single sensing signal, a down-up-chirp type signal generated in the digital domain and converted to the analog BB domain, as shown in FIG. 18, can be used as a sensing signal. Also, an up-down-chirp type signal with the down and up order reversed from FIG. 18, converted to the analog BB domain, can be used as a sensing signal. Furthermore, all possible signals that improve sensing accuracy can be included within the scope of this disclosure.

Next, the signal *s'*(*t*) after passing through the RF generator can be expressed as Equation 23: $s ′ \left(t\right) = Re \left\{{x}_{BB}\left(t\right){e}^{j 2 {πf}_{c} t}\right\}$ $s \left(t\right) = Re \left\{{x}_{BB}\left(t\right){e}^{j \left(2{πf}_{c}t+{∅}_{2}\right)}\right\}$

Here, Ø₂ represents the phase distortion that occurs after passing through the PA.

Next, ${r}_{i}^{′} \left(t\right)$ represents the RF signal of UE (or Target) i received from the receiving antenna and can be expressed as Equation 25: ${r}_{i}^{′} \left(t\right) = {A}_{i} s \left(t-{τ}_{i}\right)$

Here, *Aᵢ* represents the received signal amplitude of UE *i*, and *τᵢ* represents the Round-Trip Delay (RTD) from reflection or backscattering from UE i, which can be expressed as *τᵢ* = 2*Rᵢ*/*c.*

Next, *rᵢ*(*t*) represents the RF signal after passing through the LNA and can be expressed as Equation 26: ${r}_{i} \left(t\right) = {A}_{i} Re \left\{{x}_{BB}\left(t-{τ}_{i}\right){e}^{j \left(2{πf}_{c}\left(t-{τ}_{i}\right)+{∅}_{3}\right)}\right\}$

Here, Ø₃ represents the phase distortion that occurs after passing through the LNA.

Next, *r'_{i,IF,I}*(*t*) represents the signal after *rᵢ*(*t*) and the real component signal cos(2*πf_{c}t*) from the RF generator output pass through the mixer, and can be expressed as Equation 27. $r {′}_{i , IF , I} \left(t\right) = {r}_{i} \left(t\right) cos \left(2{πf}_{c}t\right)$

Next, *r' _{i,IF,Q}*(*t*) represents the signal after *rᵢ*(*t*) and the imaginary component signal sin(2*πf_{c}t*) from the RF generator output pass through the mixer, and can be expressed as Equation 28: $r {′}_{i , IF , Q} \left(t\right) = {r}_{i} \left(t\right) sin \left(2{πf}_{c}t\right)$

Next, the real component signal *r_{i,BB,I}*(*t*) and imaginary component signal *y_{i,BB,Q}*(*t*) after passing through the LPF, and the complex signal *r_{i,BB,I}*(*n*) consisting of the real component *r_{i,BB,I}*(*n*) and imaginary component *r_{i,BB,Q}*(*n*) in the digital BB domain after passing through the ADC can be expressed as Equation 29: ${r}_{i , BB} \left(n\right) = {r}_{i , BB , I} \left(n\right) + {jr}_{i , BB , Q} \left(n\right) , n = 0 , 1 , … , N - 1 , … , \left({N}_{r}-1\right) N , … , {N}_{r} N - 1$

Next, *r_{i,BB}*(*n*) passes through the Cross correlator, and the processed signal *yᵢ*(*n*) can be expressed as Equation 30: $\begin{matrix}{y}_{i} \left(n\right) = {\sum }_{m = 0}^{N - 1} {r}_{i , BB} \left(n+m\right) {x}_{BB}^{∗} \left(m\right) = {y}_{i , BB , I} \left(n\right) + j {y}_{i , BB , Q} \left(n\right) , n \\ = 0 , 1 , … , N - 1 , … , \left({N}_{r}-1\right) N , … , {N}_{r} N - 1\end{matrix}$

Finally, *rᵢ*(*n*) will flow into the DSP to perform the sensing and identification process.

Here, ${x}_{BB}^{∗} \left(m\right)$ is the conjugated signal of the transmitted digital BB domain sensing signal *x_{BB}*(*m*), which can be expressed as *x_{BB,I}*(*m*) *- jx_{BB,Q}*(m). The *yᵢ*(*n*) in Equation 30 may be a signal obtained by taking the cross-correlation of *r_{i,BB}*(*n*) with respect to *x_{BB}*(*m*)*.* This is done to make it conceptually equivalent to the physical characteristics of the input signal *yᵢ*(*n*) for sensing and identification within the final receiving DSP block of the first transceiver block diagram shown in FIG. 13.

In this disclosure's embodiment, cross-correlation is taken as shown in Equation 30 as one example to achieve conceptual equivalence. However, signals obtained by taking differential correlation as shown in Equation 31 can be used as *yᵢ*(*n*), and all other possible methods of signals can be included within the scope of this disclosure. $\begin{matrix}{y}_{i} \left(n\right) = {\sum }_{m = 0}^{N - 1} {r}_{i , BB} \left(n+m\right) {r}_{i , BB}^{∗} \left(n+m+N\right) , \\ n = 0 , 1 , … , N - 1 , … , \left({N}_{r}-1\right) N , … , {N}_{r} N - 1 .\end{matrix}$

Hereinafter, under the ICAS system, based on FIG. 7 and FIG. 8, this disclosure can procedurally present the sensing and identification estimation algorithm from the signal *yᵢ*(*n*) of Equation 16, Equation 30, or Equation 31 flowing into the DSP block as follows.

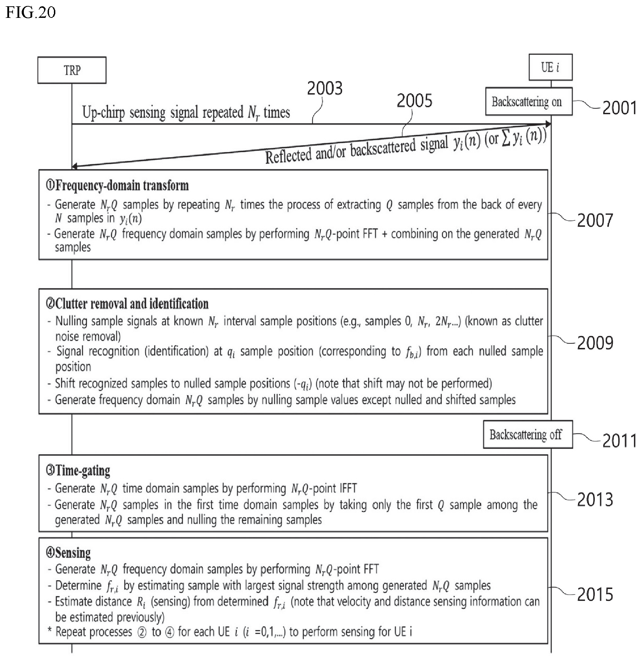

FIG. 20 illustrates an example of an Up-chirp based sensing and identification algorithm according to an embodiment of this disclosure. The algorithm in FIG. 20 is suitable for FIG. 14 or FIG. 17, and while it is explained using FIG. 17 for convenience of explanation, it is not limited to this.

Referring to FIG. 20, UE i can turn on FSK-based Backscattering (2001).

The TRP can transmit the up-chirp sensing signal *Nᵣ* times repeatedly to UE i (2003).

Next, the TRP can receive signal *yᵢ*(*n*) that is reflected and FSK-based backscattered from UE *i*, or signals Σ*yᵢ*(*n*) that are reflected and FSK-based backscattered from multiple UEs (UE *i* = 0,1,2, ...) as shown in Equation 16, Equation 30, or Equation 31 (2005). Hereinafter, this disclosure specifies the reflected or FSK-based backscattered returning signal as *yᵢ*(*n*), but this is for convenience of explanation and is not limited to this notation.

Next, the TRP can perform frequency-domain transform as follows (2007). Specifically, the TRP can generate *NᵣQ* samples by repeating *Nᵣ* times the process of extracting *Q* samples from the back of every *N* samples in *yᵢ*(*n*). An *NᵣQ* -point FFT (Fast Fourier Transform) can be performed on the generated *NᵣQ* samples to create *NᵣQ* frequency domain samples.

Here, *N* samples correspond to *T_{c}* as shown in FIG. 17, and the front *N - Q* samples (corresponding to *Tₛₖᵢₚ*) for every *N* samples are not extracted and used because they produce discontinuous different values as shown in the lower part of FIG. 17. Additionally, while this disclosure uses FFT or IFFT throughout, this is because it can be implemented with lower complexity compared to DFT (Discrete Fourier Transform) or IDFT (Inverse Discrete Fourier Transform). In cases where the FFT or IFFT size cannot be specified as a power of 2, DFT or IDFT can be applied instead of FFT or IFFT.

Next, the TRP can perform clutter removal and identification as follows (2009). First, the TRP can null the sample signals at known *Nᵣ* interval sample positions (e.g., sample 0, sample *Nᵣ*, sample 2*Nᵣ*, ...). This is called clutter noise removal. Then, the TRP can check whether the signal strength at *qᵢ* sample position (corresponding to *f*_{*b*,*i*}) from each nulled sample position has a significant value.

If this value is significant and *f*_{*b*,*i*} can be calculated from this value, the TRP recognizes that the signal at *qᵢ* sample position from each nulled sample position is backscattered from UE *i*. Next, the TRP can perform a (-*qᵢ*) shift of the recognized sample to the nulled sample position. Note that sensing can be performed without this shift, which will be mentioned in the later sensing process explanation.

Finally, frequency domain *NᵣQ* samples can be generated by nulling the values of all samples except the nulled and shifted samples. When sensing and identifying multiple Targets (UEs) simultaneously as in FIG. 4(a), the TRP identifies (or recognizes) multiple Targets from multiple significant different *qᵢ* sample positions that were checked. This is because in this case, the FSK-based backscattering on/off times are not different for each UE.

Additionally, when indicating different FSK-based backscattering on/off times for each UE as in FIG. 4(b), since the indicated time can be considered as UE identification, the UE is identified by checking for significant *f*_{*b*,*i*} (i.e., corresponding to *f_{com}* in FIG. 4(b)) at the indicated time.

For example, at this point, it can be assumed that UE i has turned off the FSK-based backscattering function according to the TRP's instruction (2011). However, this is just one example, and the FSK-based backscattering function off can occur after the aforementioned frequency-domain transform process, time-gating process, sensing process, or after the sensing process.

For example, the TRP can perform the time-gating process (2013). First, it can perform an *NᵣQ* -point IFFT on the aforementioned generated *NᵣQ* samples to create *NᵣQ* samples in the time domain. Then, it can generate *NᵣQ* samples in the time domain by taking only the first *Q* samples among the generated *NᵣQ* samples and setting all remaining sample values to zero, i.e., nulling them.

Finally, the TRP can perform the sensing process as follows (2015). First, the TRP can perform an *NᵣQ* -point FFT on the generated *NᵣQ* time domain samples to create *NᵣQ* frequency domain samples. Next, the TRP can estimate *f_{r,i}* by identifying the sample with the largest signal strength among the generated *NᵣQ* samples.

Here, the sample position with the largest value corresponds to a specific frequency value, and the frequency value of the sample position can correspond to sensing information (or ranging information, velocity information, or other sensing information) *f_{r,i}*.

For example, from the determined *f_{r,i}*, the distance *Rᵢ* from the TRP to Target (UE) *i* shown in FIG.17 can be estimated. Here, for example, since *f_{r,i}* = 2*RᵢW*/(*cT_{c}*) and *W, c, T_{c}* are known, *Rᵢ* = *f_{r,i}cT_{c}*/(2*W*) can be estimated.

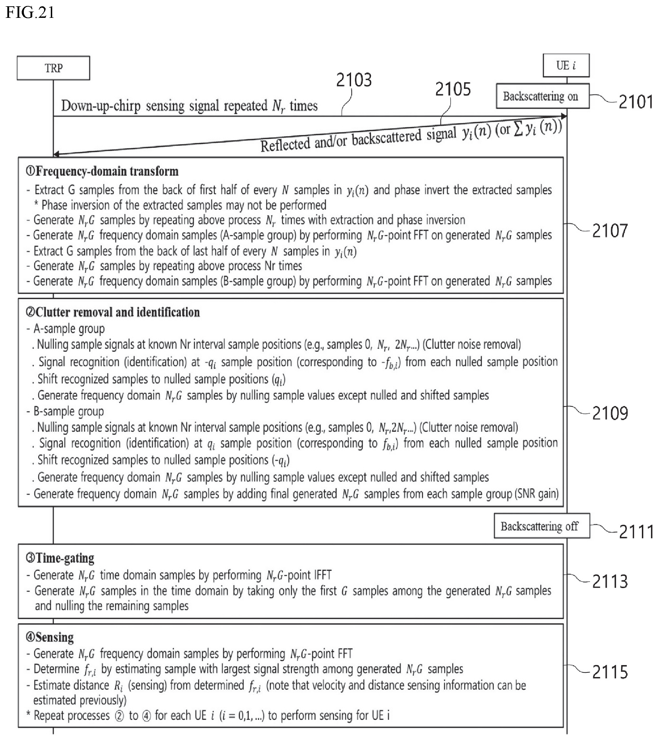

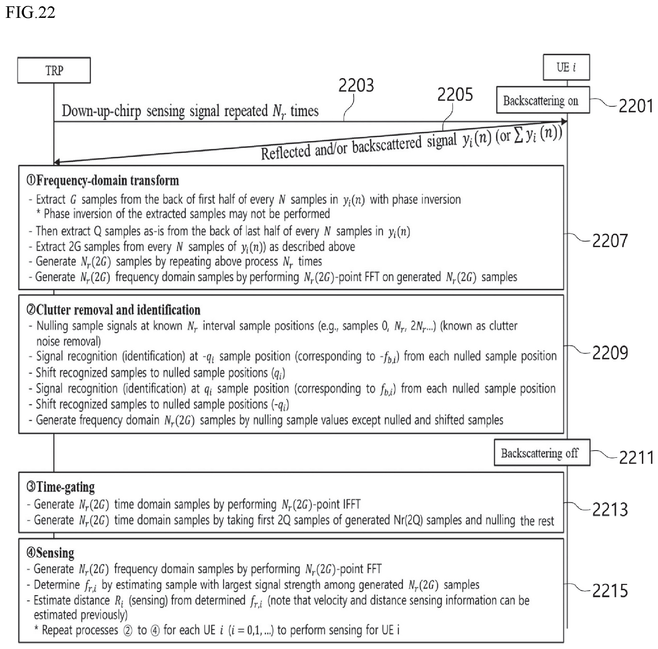

In the aforementioned clutter removal and identification process, when the shift is not performed, the corresponding frequency value becomes *f_{r,i} + f_{b,i}* rather than *f_{r,i}*. Therefore, *Rᵢ* can be estimated by considering the value obtained by mathematically subtracting *f_{b,i}* (instructed by TRP) from the estimated *f_{r,i} + f_{b,i}* as *f_{r,i}*. Additionally, this sensing process for cases without performing the shift can also be applied to the down-up-chirp based sensing and identification algorithm mentioned in FIG. 21 and 22.

Additionally, the procedural explanation of the proposed up-chirp based sensing and identification algorithm can perform sensing and identification between TRP and UE *i* by repeatedly executing the aforementioned frequency-domain transform process (2007), clutter removal and identification process (2009), time-gating process (2013), and sensing process (2015) for each UE *i* (*i* =0,1,...).

FIG. 21 illustrates an example of a first Down-up-chirp based sensing and identification algorithm according to an embodiment of this disclosure. The algorithm in FIG. 21 is suitable for FIG. 15 or FIG. 18, and while it is explained using FIG. 18 for convenience of explanation, it is not limited to this.

Referring to FIG. 21, UE i can turn on FSK-based backscattering (2101).

The TRP can transmit the down-chirp sensing signal *Nᵣ* times repeatedly to UE *i* (2103).

Next, the TRP can perform the frequency-domain transform process as follows (2105). First, as shown in the lower part of FIG. 18, from *yᵢ*(*n*), extract the back G samples from the first half of every *N* samples and reverse the phase of the extracted samples. According to one embodiment, the phase reversal of the extracted samples may not be performed.

Next, repeat the above process *Nᵣ* times to generate *NᵣG* samples that are extracted and phase-reversed. Then, perform an *NᵣG* -point FFT on these generated *NᵣG* samples to create *NᵣG* frequency domain samples. This can be named the A-sample group.

Meanwhile, as shown in the lower part of FIG. 18, from *yᵢ*(*n*), extract the back *G* samples from the last half of every *N* samples. Next, repeat this extraction process *Nᵣ* times to generate *NᵣG* extracted samples. Then, perform an *NᵣG* -point FFT on these generated *NᵣG* samples to create *NᵣG* frequency domain samples. This is named the B-sample group.

Next, the TRP can perform clutter removal and identification process (2107). First, for the A-sample group, perform the following process. First, null the sample signals at known *Nᵣ* interval sample positions (e.g., sample 0, sample *Nᵣ*, sample 2*Nᵣ*, ...). This is called clutter noise removal. Next, check if the signal strength at -*qᵢ* sample position (corresponding to -*f_{b,i}*) from each nulled sample position has a significant value. If the value is significant and *f_{b,i}* can be calculated from it, the TRP recognizes that the signal at *qᵢ* sample position from each nulled sample position is FSK-based backscattered from UE i. Next, perform a (*qᵢ*) shift of the recognized sample to the nulled sample position. Finally, generate *NᵣG* frequency domain samples by nulling all sample values except the nulled and shifted samples.

Meanwhile, for the B-sample group, perform the following process similar to the A-sample group. First, null the sample signals at known *Nᵣ* interval sample positions (e.g., sample 0, sample *Nᵣ*, sample 2*Nᵣ*, ...). Next, check if the signal strength at *qᵢ* sample position (corresponding to *f_{b,i}*) from each nulled sample position has a significant value. If the value is significant and *f_{b,i}* can be calculated from it, the TRP recognizes that the signal at *qᵢ* sample position from each nulled sample position is FSK-based backscattered from UE *i*. Next, perform a (-*qᵢ*) shift of the recognized sample. Here, sensing can be performed without this shift, which will be mentioned in the later sensing process explanation. Finally, generate *NᵣG* frequency domain samples by nulling all samples except the nulled and shifted ones.

Finally, generate *NᵣG* frequency domain samples by adding samples from each sample group's final *NᵣG* samples. Through this *NᵣG* sample generation process, SNR (Signal to Noise Ratio) gain can be achieved. Here, when sensing and identifying multiple Targets (UEs) simultaneously as in FIG. 2(a), the TRP can identify multiple Targets from multiple significant different *qᵢ* sample positions. This is because in this case, FSK-based backscattering on/off times are not different for each UE. Additionally, when indicating different FSK-based backscattering on/off times for each UE as in FIG. 2(b), the indicated time can be considered as UE identification. Therefore, UEs can be identified by checking for significant *f_{b,i}* (corresponding to *f_{com}* in FIG. 2(b)) at the indicated time.

Next, as an example, it can be assumed that at this point, UE *i* has turned off the FSK-based backscattering function according to the TRP's instruction. However, it should be noted that this is just one example, and the FSK-based backscattering function off can occur after the frequency-domain transform process (2105), time-gating process (2111), sensing process (2113), or after the sensing process.

Next, the TRP performs the time-gating process as follows. First, perform an *NᵣG -* point IFFT on the generated *NᵣG* samples to create *NᵣG* samples in the time domain. Next, generate *NᵣG* samples in the time domain by taking only the first *G* samples among the generated *NᵣG* samples and setting all remaining sample values to zero, i.e., nulling them.

Finally, the TRP can perform the sensing process as follows. First, perform an *NᵣG -* point FFT on the generated *NᵣG* time domain samples to create *NᵣG* frequency domain samples. Next, determine *f_{r,i}* by estimating the sample with the largest signal strength among the generated *NᵣG* samples.

Here, the sample position with the largest value corresponds to a specific frequency value, and this sample position's frequency value can correspond to sensing information (or ranging information, velocity information, or other sensing information) *f_{r,i}*.

Next, as an example, from the determined *f_{r,i}*, the distance *Rᵢ* from the TRP to Target (UE) *i* shown in FIG. 18 can be estimated. Here, as an example, since *f_{r,i}* = 2*RᵢW*/(*cT_{c}*) and *W, c, T_{c}* are known, *Rᵢ* = *f_{r,i}cT_{c}*/(2*W*) can be estimated from this.

Additionally, the procedural explanation of the proposed down-up-chirp based sensing and identification algorithm can perform sensing and identification between TRP and UE *i* by repeatedly executing the aforementioned frequency-domain transform process (2105), clutter removal and identification process (2107), time-gating process (2111), and sensing process (2113) for each UE *i* (*i* = 0,1, ...).

FIG. 22 illustrates an example of a second Down-up-chirp based sensing and identification algorithm according to an embodiment of this disclosure. The algorithm in FIG. 22 is suitable for FIG. 15 or FIG. 18, and while it is explained using FIG. 18 for convenience of explanation, it is not limited to this.

Referring to FIG. 22, UE i can turn on FSK-based backscattering (2201).

The TRP can transmit the down-chirp sensing signal *Nᵣ* times repeatedly to UE *i* (2203).

The TRP can receive signal *yᵢ*(*n*) that is reflected and FSK-based backscattered from UE *i*, or signals Σ*y*ᵢ(*n*) that are reflected and FSK-based backscattered from multiple UEs (UE *i* = 0,1,2, ...) as shown in Equation 16, Equation 30, or Equation 31 (2205). Hereinafter, in this disclosure, while the reflected or FSK-based backscattered returning signal is specified as *yᵢ*(*n*), this is for convenience of explanation and is not limited to this notation.

Next, the TRP can perform the frequency-domain transform process as follows (2207). First, as shown in the lower part of FIG. 18, extract the back *G* samples from the first half of every *N* samples in *yᵢ*(*n*) and reverse the phase of the extracted samples. According to one embodiment, the phase reversal of the extracted samples may not be performed.

Additionally, as shown in the lower part of FIG. 18, extract the back G samples from the last half of every *N* samples in *yᵢ*(*n*) as they are. As described above, 2G samples can be extracted from every *N* samples in *yᵢ*(*n*). Next, repeat this process *Nᵣ* times to generate *Nᵣ*(2*G*) samples in the time domain. Then, perform an *Nᵣ*(2*G*)-point FFT on the generated *Nᵣ*(2*G*) samples to create *Nᵣ*(2*G*) frequency domain samples.

Next, the TRP can perform clutter removal and identification process as follows (2209). First, null the sample signals at known *Nᵣ* interval sample positions (e.g., sample 0, sample *Nᵣ*, sample 2*Nᵣ*, ...). This is called clutter noise removal. Next, check if the signal strength at -*qᵢ* sample position (corresponding to -*f_{b,i}*) from each nulled sample position has a significant value. If the value is significant and *f_{b,i}* can be calculated from it, the TRP recognizes that the signal at *qi* sample position from each nulled sample position is FSK-based backscattered from UE i. Next, perform a (*qᵢ*) shift of the recognized sample to the nulled sample position.

Meanwhile, check if the signal strength at *qᵢ* sample position (corresponding to *f_{b,i}*) from each nulled sample position has a significant value. If the value is significant and *f_{b,i}* can be calculated from it, the TRP recognizes that the signal at *qᵢ* sample position from each nulled sample position is FSK-based backscattered from UE i. Next, perform a (-*qᵢ*) shift of the recognized sample to the nulled sample position. Finally, generate *Nᵣ*(2*G*) frequency domain samples by nulling all sample values except the nulled and shifted samples.

Here, when sensing and identifying multiple Targets (UEs) simultaneously as in FIG. 2(a), the TRP can identify multiple Targets from multiple significant different *qᵢ* sample positions. This is because in this case, FSK-based backscattering on/off times are not different for each UE. Additionally, when indicating different FSK-based backscattering on/off times for each UE as in FIG. 2(b), since the indicated time can be considered as UE identification, UEs can be identified by checking for significant *f_{b,i}* (corresponding to *f_{com}* in FIG. 2(b)) at the indicated time.

Next, at this point, it can be assumed that UE i has turned off the FSK-based backscattering function according to the TRP's instruction (2211). However, this is just one example, and the FSK-based backscattering function off can occur after the frequency-domain transform process (2207), time-gating process (2213), sensing process (2215), or after the sensing process.

Next, the TRP can perform the time-gating process as follows (2213). First, perform an *Nᵣ*(2*G*)-point IFFT on the generated *Nᵣ*(2*G*) samples to create *Nᵣ*(2*G*) samples in the time domain. Next, generate *Nᵣ*(2*G*) samples in the time domain by taking only the first 2*G* samples among the generated *Nᵣ*(2*G*) samples and setting all remaining sample values to zero, i.e., nulling them.

Finally, the TRP can perform the sensing process as follows (2115). First, perform an *Nᵣ*(2*G*) -point FFT on the generated *Nᵣ*(2*G*) time domain samples to create *Nᵣ*(2*G*) frequency domain samples. Next, determine *f_{r,i}* by estimating the sample with the largest signal strength among the generated *Nᵣ*(2*G*) samples.

Here, the sample position with the largest value corresponds to a specific frequency value, and this sample position's frequency value can correspond to sensing information (or ranging information, velocity information, or other sensing information) *f_{r,i}*.

Next, as an example, from the determined *f_{r,i}*, the distance *Rᵢ* from the TRP to Target (UE) *i* shown in FIG. 18 can be estimated. Here, as an example, since *f_{r,i}* = 2*RᵢW*/(*cT_{c}*) and *W, c, T_{c}* are known, *Rᵢ* = *f_{r,i}cT_{c}*/(2*W*) can be estimated from this.

Additionally, the procedural explanation of the proposed down-up-chirp based sensing and identification algorithm in this disclosure can perform sensing and identification between TRP and UE *i* by repeatedly executing the aforementioned frequency-domain transform process (2207), clutter removal and identification process (2209), time-gating process (2213), and sensing process (2215) for each UE *i* (*i* = 0,1, ...).

Additionally, this disclosure notes that the procedural explanation of the sensing and identification algorithm for up-down-chirp based sensing signals is not different from the procedural explanation of the down-up-chirp based sensing and identification algorithm described in FIG. 21 and FIG. 22, except that the procedural explanations for the down-chirp portion in the first half and the up-chirp portion in the last half of the sensing signal are switched to apply to the last half portion and the first half portion, respectively.

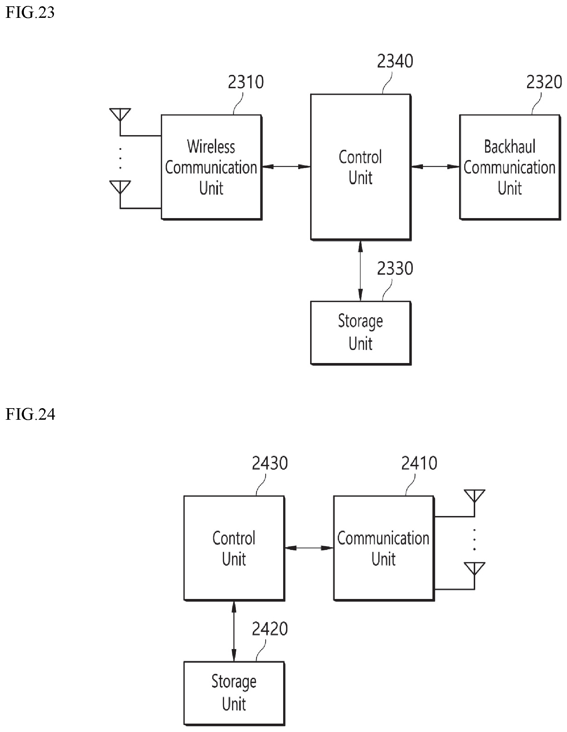

FIG. 23 illustrates a configuration of a base station in a wireless communication system according to various embodiments of this disclosure. The configuration shown in FIG. 23 can be understood as the structure of a base station. The terms '...unit', '...device' etc. used hereinafter refer to units that process at least one function or operation, and can be implemented in hardware, software, or a combination of hardware and software.

Referring to FIG. 23, the base station may include a wireless communication unit (2310), a backhaul communication unit (2320), a storage unit (2330), and a control unit (2340).

The wireless communication unit (2310) can transmit and receive wireless signals through wireless channels. For example, the wireless communication unit (2310) can perform conversion functions between baseband signals and bit streams according to the physical layer specifications of the system. Additionally, when transmitting data, the wireless communication unit (2310) can generate complex symbols by encoding and modulating transmission bit streams. When receiving data, the wireless communication unit (2310) can restore received bit streams through demodulation and decoding of baseband signals.

The wireless communication unit (2310) can up-convert baseband signals to RF (radio frequency) band signals for transmission through antennas, and down-convert RF band signals received through antennas to baseband signals. For this purpose, the wireless communication unit (2310) may include transmission filters, reception filters, amplifiers, mixers, oscillators, DAC (digital to analog converter), and ADC (analog to digital converter).

The wireless communication unit (2310) can include multiple transmission/reception paths, and can include at least one antenna array composed of multiple antenna elements.

From a hardware perspective, the wireless communication unit (2310) can include a digital unit and an analog unit, where the analog unit may include multiple sub-units depending on operating power, operating frequency, etc. The digital unit can be implemented with at least one processor (e.g., DSP (digital signal processor)).

The wireless communication unit (2310) can transmit and receive wireless signals as described above. Accordingly, all or part of the wireless communication unit (2310) can be referred to as a 'transmitter', 'receiver' or 'transceiver'. Also, in the following description, transmission and reception through wireless channels may include processing performed by the wireless communication unit (2310) as described above.

The backhaul communication unit (2320) can provide an interface for communication with other nodes in the network. That is, the backhaul communication unit (2320) can convert bit streams transmitted from the base station to other nodes, such as other access nodes, other base stations, higher nodes, and core networks, into physical signals, and convert physical signals received from other nodes into bit streams.

The storage unit (2330) can store data such as basic programs, applications, and configuration information for the operation of the base station. The storage unit (2330) can be composed of volatile memory, non-volatile memory, or a combination of volatile and non-volatile memory. The storage unit (2330) can provide stored data according to requests from the control unit (2340).

The control unit (2340) can control the overall operations of the base station. For example, the control unit (2340) can transmit and receive signals through the wireless communication unit (2310) or the backhaul communication unit (2320). Additionally, the control unit (2340) can write and read data to and from the storage unit (2330). Also, the control unit (2340) can perform the functions of the protocol stack required by communication specifications.

For this purpose, the control unit (2340) may include at least one processor.

According to various embodiments of this disclosure, the control unit (2340) can control the execution of various operations according to the various embodiments performed by the aforementioned base station.

FIG. 24 illustrates a configuration of a user equipment (UE) in a wireless communication system according to various embodiments of this disclosure. The configuration shown in FIG. 24 can be understood as the structure of a UE. The terms '...unit', '...device' etc. used hereinafter refer to units that process at least one function or operation, and can be implemented in hardware, software, or a combination of hardware and software.

Referring to FIG. 24, the UE may include a communication unit (2410), a storage unit (2420), and a control unit (2430).

The communication unit (2410) can perform functions for transmitting and receiving signals through wireless channels. For example, the communication unit (2410) can perform conversion functions between baseband signals and bit streams according to the physical layer specifications of the system. For example, when transmitting data, the communication unit (2410) can generate complex symbols by encoding and modulating transmission bit streams. When receiving data, the communication unit (2410) can restore received bit streams through demodulation and decoding of baseband signals. Additionally, the communication unit (2410) can up-convert baseband signals to RF band signals for transmission through antennas, and down-convert RF band signals received through antennas to baseband signals. For example, the communication unit (2410) may include transmission filters, reception filters, amplifiers, mixers, oscillators, DAC, ADC, etc.

The communication unit (2410) can include multiple transmission/reception paths. Furthermore, the communication unit (2410) can include at least one antenna array composed of multiple antenna elements. From a hardware perspective, the communication unit (2410) can be composed of digital circuits and analog circuits (e.g., RFIC (radio frequency integrated circuit)). Here, the digital circuits and analog circuits can be implemented as a single package. Additionally, the communication unit (310) can include multiple RF chains. Furthermore, the communication unit (2410) can perform beamforming.

The communication unit (2410) transmits and receives signals as described above. Accordingly, all or part of the communication unit (2410) can be referred to as a 'transmitter', 'receiver' or 'transceiver'. Also, in the following description, transmission and reception through wireless channels may include processing performed by the communication unit (2410) as described above.

The storage unit (2420) can store data such as basic programs, applications, and configuration information for the operation of the UE. The storage unit (2420) can be composed of volatile memory, non-volatile memory, or a combination of volatile and non-volatile memory. The storage unit (2420) can provide stored data according to requests from the control unit (2430).

The control unit (2430) can control the overall operations of the UE. For example, the control unit (2430) can transmit and receive signals through the communication unit (2410). Additionally, the control unit (2430) can write and read data to and from the storage unit (2420). The control unit (2430) can perform the functions of the protocol stack required by communication specifications. For this purpose, the control unit (2430) may include at least one processor or microprocessor, or may be part of a processor. Additionally, part of the communication unit (2410) and the control unit (2430) can be referred to as a CP (communication processor).

According to various embodiments, the control unit (2430) can control the execution of various operations according to the various embodiments performed by the aforementioned UE.

The methods according to the embodiments described in the claims or specification of this disclosure can be implemented in the form of hardware, software, or a combination of hardware and software.

When implementing in software, a computer-readable storage medium storing one or more programs (software modules) can be provided. One or more programs stored in the computer-readable storage medium are configured for execution by one or more processors within an electronic device. The one or more programs include instructions that cause the electronic device to execute the methods according to the embodiments described in the claims or specification of this disclosure.

Such programs (software modules, software) can be stored in random access memory, non-volatile memory including flash memory, ROM (read only memory), EEPROM (electrically erasable programmable read only memory), magnetic disk storage devices, CD-ROM (compact disc-ROM), DVDs (digital versatile discs) or other forms of optical storage devices, magnetic cassettes. Alternatively, they can be stored in memory composed of combinations of some or all of these. Also, each constituent memory may include multiple units.

Additionally, programs can be stored in attachable storage devices that can be accessed through communication networks such as the Internet, Intranet, LAN (local area network), WAN (wide area network), or SAN (storage area network), or combinations thereof. Such storage devices can connect to the device performing the embodiments of this disclosure through external ports. Also, separate storage devices on the communication network may connect to the device performing the embodiments of this disclosure.

In the specific embodiments of this disclosure described above, components included in the disclosure were expressed in singular or plural form according to the specific embodiments presented. However, the singular or plural expression was selected as appropriate for the situation for convenience of explanation, and this disclosure is not limited to singular or plural components. Components expressed in plural may be configured in singular, and components expressed in singular may be configured in plural.

While the detailed description of this disclosure has explained specific embodiments, it is obvious that various modifications are possible within the scope of this disclosure. Therefore, the scope of this disclosure should not be determined to be limited to the described embodiments, but should be determined by the following claims and their equivalents.

## Claims

1. A method performed by a base station (BS) for combining communication and sensing in a baseband of a single carrier in a wireless communication system, the method comprising:
transmitting, to a user equipment (UE), multiplexed signals comprising baseband communication signals and frequency domain sensing signals in the same frequency band or time band;
transmitting and receiving data with the UE, wherein the UE is synchronized and connected with the BS for combining communication and sensing in the baseband of a single carrier;
performing communication by delivering to the UE at least one of frequency shift keying (FSK) based backscattering on/off timing and FSK frequency shift value;
transmitting the frequency sensing signal to a target, wherein the frequency domain sensing signal is allocated to the frequency domain of the baseband at the backscattering on timing, and has various chirp forms for the time domain signal of the baseband;
identifying that the target is the UE based on the FSK-based backscattered returning signal of the frequency domain sensing signal, and estimating at least one of position, velocity, direction, or size information of the target; and
transmitting a control signal to the UE for processing the sensing signal and the communication signal simultaneously or sequentially.

2. The method of claim 1, wherein the communication signal and the sensing signal are transmitted using Frequency Division Multiplexing (FDM).

3. The method of claim 2, wherein when using FDM for the communication signal and the sensing signal, a portion of the communication signal in the frequency domain is a communication signal adapted to a single carrier transmission method, and wherein no signal is transmitted in the highest frequency resource and the lowest frequency resource of the communication signal adapted to the single carrier transmission method to prevent affecting other frequency domain resources.

4. The method of claim 1, wherein the communication signal and the sensing signal are sequentially transmitted using Time Division Multiplexing (TDM).

5. The method of claim 1, further comprising dynamically adjusting frequency bands or time bands to minimize interference between the communication signal and the sensing signal.

6. The method of claim 1, wherein the baseband signal x_BB(n) is a C-signal containing sensing information in the frequency domain, defined according to the following equation: ${X}_{BB} \left(k\right) = exp \left(j\frac{2 π \left({ak}^{2}+bk+c\right)}{M}\right) , k = 0 , 1 , … , M - 1$ wherein a, b, and c have arbitrary real values, and x_BB(n) can have a chirp form according to set parameter values.

7. A method performed by a user equipment (UE) for combining communication and sensing in a baseband of a single carrier in a wireless communication system, the method comprising:
performing synchronization and connection with a base station (BS) for combining communication and sensing in the baseband of a single carrier;
transmitting and receiving data with the BS;
performing communication by receiving from the BS at least one of FSK-based backscattering on/off timing or FSK frequency shift value;
turning on the FSK-based backscattering function at the on timing with the FSK frequency shift value or a fixed frequency shift value; and
turning off the FSK-based backscattering function at the off timing with the FSK frequency shift value or a fixed frequency shift value.

8. The method of claim 7, wherein the communication signal and sensing signal are received by the UE separately through Frequency Division Multiplexing (FDM) by the BS.

9. The method of claim 7, wherein the communication signal and sensing signal are received by the UE separately through Time Division Multiplexing (TDM) by the BS.

10. The method of claim 7, wherein in receiving and analyzing target information provided from the BS through the sensing signal, the UE receives beamforming signals from the BS based on the target's position information estimated through the sensing signal.

11. The method of claim 7, wherein the communication signal and the sensing signal are processed simultaneously in parallel through separate processing modules within the UE.

12. A method performed by a base station (BS) for utilizing frequency bands for communication and sensing in a baseband of a single carrier in a wireless communication system, the method comprising:
allocating separate frequency bands for communication and sensing;
estimating position, velocity, direction, or size of a target by analyzing signals transmitted within the frequency band for sensing; and
performing data transmission and reception with a user equipment (UE) in the frequency band for communication.

13. The method of claim 12, wherein the frequency bands include a pre-configured guard band to minimize interference between the frequency band for communication and the frequency band for sensing.

14. The method of claim 12, wherein the BS uses dynamic frequency band allocation for efficient transmission of the communication signal and the sensing signal.

15. The method of claim 12, wherein the sensing signal is transmitted in high frequency bands of 6GHz or higher.

16. The method of claim 12, wherein the allocating separate frequency bands for communication and sensing further comprising,
adjusting, by the base station, the allocation of the frequency bands in real time according to the state of the user equipment and a network load.

17. A base station (BS) for utilizing frequency bands for communication and sensing in a baseband of a single carrier in a wireless communication system, the base station comprising:
a transceiver; and
a control unit operably connected to the transceiver;
wherein the control unit is configured to,
multiplex a communication signal and a sensing signal in a same frequency band or a same time band, and transmit the multiplexed communication signal and sensing signal to a user equipment (UE),
estimate at least one of a location, a velocity, a direction, or a size of a target based on the sensing signal,
transmit and receive data to and from the UE via the communication signal, and
transmit, to the UE, a control signal for processing the sensing signal and the communication signal simultaneously or sequentially.

18. The base station of claim 17, wherein the communication signal and the sensing signal are transmitted using Frequency Division Multiplexing (FDM).

19. The base station of claim 17, wherein the communication signal and the sensing signal are sequentially transmitted using Time Division Multiplexing (TDM).

20. The base station of claim 17, wherein the control unit is further configured to estimate a velocity of the target based on a frequency shift of the sensing signal.
